# EUROPEAN PATENT APPLICATION

(11) **EP 4 797 781 A1**
(43) Date of publication of application: **26.08.2026**
(21) Application number: 24884378.1
(22) Date of filing: 09.10.2024
(51) Int. Cl.: H04W 28/02

(54) **COMMUNICATION METHOD AND APPARATUS**

(30) Priority: 03.11.2023 CN 202311463204
(71) Applicant: HUAWEI TECHNOLOGIES CO., LTD., Shenzhen 518129 (CN)
(72) Inventor: PAN, Qi, Shenzhen, Guangdong 518129 (CN); NI, Hui, Shenzhen, Guangdong 518129 (CN)
(74) Representative: Goddar, Heinz J.
(86) International application number: PCT/CN2024/123744
(87) International publication number: WO 2025/092374

(57) **Abstract**

This application provides a communication method and apparatus, and pertains to the field of communication technologies. In this method, a network element on a network side, for example, a first network element, may obtain network congestion information of a service flow, to determine a possibility that congestion occurs on a current network and perform supervision. For example, after a network congestion degree becomes higher, for example, a possibility of network congestion has reached a level that an application side needs to reduce the possibility of network congestion by adjusting transmission of the service flow, if the first network element determines, by monitoring the transmission of the service flow, that the application side does not adjust the transmission of the service flow, the first network element can manage and/or control the transmission of the service flow, to avoid network congestion and also ensure fairness between services, thereby ensuring user experience.

## Description

This application claims priority to Chinese Patent Application No. 202311463204.4, filed with the China National Intellectual Property Administration on November 3, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

The 3rd generation partnership project (3rd generation partnership project, 3GPP) discusses, in the research of R18, exposing status information on a network side to an application side. For example, a radio access network (radio access network, RAN) device or a user plane function (user plane function, UPF) network element exposes network congestion information of a service flow to the application side. Ideally, the application side needs to sense a network congestion degree based on the network congestion information and adjust transmission of the service flow correspondingly, for example, reduce a bitrate, to ensure user experience.

However, a current mechanism cannot ensure that the application side adjusts the transmission of the service flow based on a network condition (for example, the congestion information). Consequently, use experience of the user cannot be ensured actually.

### SUMMARY

Embodiments of this application provide a communication method and apparatus, ensuring that user experience remains intact even when adjustments to transmission of a service flow are required at an application side but are not actually implemented.

To achieve the foregoing objective, this application uses the following technical solutions.

According to a first aspect, a communication method is provided, applied to a first network element and including: The first network element obtains network congestion information of a service flow; the first network element determines, based on the network congestion information of the service flow, that transmission of the service flow needs to be adjusted but is not adjusted; and the first network element manages and/or controls, the transmission of the service flow based on determining that the transmission of the service flow needs to be adjusted but is not adjusted.

It can be learned based on the foregoing method that, a network element on a network side, for example, the first network element, may obtain the network congestion information of the service flow, to determine a possibility that congestion occurs on a current network and perform supervision. For example, after a network congestion degree becomes higher, for example, the possibility of network congestion has reached a level that an application side needs to reduce the possibility of network congestion by adjusting the transmission of the service flow, if the first network element determines, by monitoring the transmission of the service flow, that the application side does not adjust the transmission of the service flow, the first network element can manage and/or control the transmission of the service flow, to avoid network congestion and also ensure fairness between services, thereby ensuring user experience.

In a possible design solution, the method further includes: obtaining configuration information of the service flow, where the configuration information indicates the first network element to determine, based on a congestion degree of the service flow, whether the transmission of the service flow needs to be adjusted, and manage and/or control the transmission of the service flow when the transmission of the service flow needs to be adjusted but is not adjusted.

In response to the configuration information, the first network element determines, based on the network congestion information of the service flow, that the transmission of the service flow needs to be adjusted but is not adjusted, and the first network element manages and/or controls, the transmission of the service flow based on determining that the transmission of the service flow needs to be adjusted but is not adjusted.

For example, the configuration information may indicate the first network element to determine, based on the congestion degree of the service flow, whether the transmission of the service flow needs to be adjusted, and manage and/or control the transmission of the service flow when the transmission of the service flow needs to be adjusted but is not adjusted. In other words, performing supervision on the service flow by the first network element may be triggered by delivering the configuration information by the network, to perform supervision on demand, thereby avoiding resource wastes.

Optionally, the configuration information includes supervision indication information, and optionally, may further include information indicating the service flow, for example, flow description information of the service flow, specifically, information such as an IP triplet or an IP quintuple, or an identifier of a QoS flow corresponding to the service flow, for example, a QFI, or the supervision indication information. The supervision indication information may indicate that it is necessary to determine, based on the congestion degree, whether the transmission needs to be adjusted, and manage and/or control the transmission when the transmission needs to be adjusted but is not adjusted. In other words, the information indicating the service flow may be decoupled from the supervision indication information, and the two may be combined to indicate a function of the configuration information, so that an indication manner is more flexible.

It may be understood that the configuration information may alternatively not include the information indicating the service flow. For example, the service flow is pre-aligned between the first network element and the network, and the first network element may perform a supervision operation on the service flow by default according to the supervision indication information. Alternatively, the configuration information may be sent to the first network element together with the information indicating the service flow, to ensure that the first network element can perform the supervision operation indicated by the configuration information on the service flow. Alternatively, the configuration information may not include the supervision indication information. For example, the configuration information may alternatively be of a new information type, and the new information type implicitly indicates the supervision operation.

Further, the configuration information may further indicate a monitoring time period. The monitoring time period is a time period used to monitor whether the transmission of the service flow is adjusted. In response to the configuration information, the first network element determines, based on the network congestion information of the service flow, that the transmission of the service flow needs to be adjusted but is not adjusted in the monitoring time period, and the first network element manages and/or controls the transmission of the service flow based on determining that the transmission of the service flow needs to be adjusted but is not adjusted in the monitoring time period. In other words, the first network element may implement scheduled supervision based on the monitoring time period. This can also avoid resource wastes.

In a possible design solution, that the first network element determines that the transmission of the service flow is not adjusted includes: The first network element determines that the transmission of the service flow is at least one of the following: a transmission rate does not decrease, a decrease amplitude of the transmission rate is less than an amplitude threshold, or the transmission rate increases, to implement overall transmission monitoring, thereby avoiding monitoring vulnerability.

Optionally, that the first network element determines, based on the network congestion information of the service flow, that the transmission of the service flow needs to be adjusted includes: The first network element may determine, based on the network congestion information of the service flow, that the congestion degree of the service flow is greater than or equal to a congestion degree threshold; or the first network element may determine, based on the network congestion information of the service flow, that an increment of the congestion degree of the service flow is greater than or equal to an increment threshold. In other words, if the congestion degree of the service flow is greater than or equal to the congestion degree threshold, or the increment of the congestion degree of the service flow is greater than or equal to the increment threshold, it may indicate that a possibility of network congestion caused by the transmission of the service flow is high. In this way, the first network element can effectively avoid network congestion by monitoring the service flow on this basis.

In a possible design solution, the first network element is an access network device, the service flow is carried by a QoS flow, the network congestion information of the service flow is network congestion information of the QoS flow, and that the first network element manages and/or controls the transmission of the service flow includes: The access network device performs at least one of the following on the QoS flow: sending an exception report to a session management network element or a user plane network element, discarding a data packet carried in the QoS flow, reducing a transmission priority of a data radio bearer DRB to which the QoS flow is mapped, mapping the QoS flow to a new DRB, or increasing a congestion degree of the QoS flow when exposing new network congestion information of the QoS flow. A proportion value represented by the new network congestion information is a sum of a proportion value represented by the network congestion information of the QoS flow and a preset increment proportion value.

For example, the session management network element and the user plane network element may be network elements corresponding to the QoS flow, and the exception report may indicate that transmission of the data packet carried in the QoS flow is abnormal, so that the session management network element triggers a policy control network element to perform control processing, for example, degradation, on the QoS flow. Specifically, QoS guarantee may be reduced, to implement transmission rate limiting, and avoid network congestion and transmission fairness problems, or the policy control network element may be triggered to notify an application side to give an alarm. If the access network device discards the data packet carried in the QoS flow, or reduces the transmission priority of the DRB to which the QoS flow is mapped, the access network device may locally limit a transmission rate of the QoS flow, to avoid network congestion and avoid a transmission fairness problem caused by malicious contention of the service flow corresponding to the QoS flow. If the access network device maps the QoS flow to the new DRB, the QoS flow may be decoupled from another QoS flow that shares the DRB in advance, to avoid a transmission fairness problem caused because the QoS flow preempts a DRB resource of the another QoS flow. If the access network device exposes the new network congestion information of the QoS flow, the application side adjusts the transmission based on a higher congestion degree, for example, reduces a bitrate, to avoid network congestion and avoid a transmission fairness problem.

Optionally, the exception report may include an identifier of the QoS flow and/or information that indicates that the transmission of the data packet is abnormal. It can be learned that the identifier of the QoS flow may be decoupled from the information indicating that transmission of the data packet is abnormal, and the two may be combined to indicate a function of the exception report, so that an indication manner is more flexible.

It may be understood that the exception report may alternatively not include the identifier of the QoS flow. For example, the QoS flow is pre-aligned between the access network device and the session management network element/user plane network element, and the session management network element/user plane network element may consider, by default based on the exception report, that the transmission of the data packet carried in the QoS flow is abnormal. Alternatively, the exception report may not include the information indicating that the transmission of the data packet is abnormal. For example, the exception report may alternatively be of a new report type, that is, the report type implicitly indicates that the transmission is abnormal.

In a possible design solution, the first network element is a user plane network element, the service flow is carried by a QoS flow, the network congestion information of the service flow is network congestion information of the QoS flow, and that the first network element manages and/or controls the transmission of the service flow includes: The user plane network element performs at least one of the following on the QoS flow: sending an exception report to a session management network element, discarding a data packet carried in the QoS flow, sending an alarm notification to an application function network element, or exposing new network congestion information of the QoS flow. A proportion value represented by the new network congestion information is a sum of a proportion value represented by the network congestion information of the QoS flow and a preset increment proportion value.

For example, the session management network element may be a network element corresponding to the QoS flow, and the exception report may indicate that transmission of the data packet carried in the QoS flow is abnormal, so that the session management network element triggers a policy control network element to perform control processing, for example, degradation, on the QoS flow. Specifically, QoS guarantee may be reduced, to implement transmission rate limiting, and avoid network congestion and transmission fairness problems, or the policy control network element may be triggered to notify an application side to give an alarm. If the user plane network element discards the data packet carried in the QoS flow, the user plane network element may locally limit a transmission rate of the QoS flow, to avoid network congestion and transmission fairness problems. The application function network element may be a network element corresponding to the service flow, and the alarm notification may indicate that transmission of a data packet of a service corresponding to the service flow is abnormal. If the user plane network element sends the alarm notification to the application function network element or exposes the new network congestion information of the QoS flow, the application side adjusts the transmission based on a higher congestion degree or an alarm that the transmission is abnormal, to avoid network congestion and transmission fairness problems. It should be understood that the foregoing service flow may also be replaced with the QoS flow transmitting the service flow.

Optionally, the exception report may include an identifier of the QoS flow and/or information that indicates that the transmission of the data packet is abnormal, where the identifier of the QoS flow may be the QoS flow identifier, QFI. The alarm notification may include an identifier of the service and/or information that indicates that the transmission of the data packet is abnormal. For a specific implementation, refer to the foregoing related description. Details are not described herein again.

In a possible design solution, the first network element is a user plane network element, and that the first network element manages and/or controls the transmission of the service flow includes: The user plane network element performs at least one of the following on the service flow: sending an exception report to a session management network element, sending an alarm notification to an application function network element, discarding a data packet in the service flow, or exposing new network congestion information of the service flow.

For example, the session management network element or the application function network element is a network element corresponding to the service flow, and the exception report or the alarm notification indicates that transmission of a data packet of a service corresponding to the service flow is abnormal. If the user plane network element sends the exception report to the session management network element, the session management network element triggers a policy control network element to degrade guarantee of the service flow, to implement transmission rate limiting, and avoid network congestion and a problem of transmission fairness between a plurality of service flows. If the user plane network element discards the data packet in the service flow, the user plane network element may locally limit a transmission rate of the service flow, to avoid network congestion and a problem of transmission fairness between a plurality of service flows. If the user plane network element sends the alarm notification to the application function network element or exposes the new network congestion information of the service flow, the application side adjusts the transmission based on a higher congestion degree or an alarm that the transmission is abnormal, to avoid network congestion and a problem of transmission fairness between a plurality of service flows.

Optionally, the exception report or the alarm notification includes an identifier of the service flow and/or information that indicates that transmission of the data packet is abnormal. The identifier of the service flow may be flow description information corresponding to the service flow, such as an IP quintuple, an IP triplet, or other information. For a specific implementation, refer to the foregoing related description, and details are not described herein again.

Optionally, the configuration information may include at least one of the following: a supervision policy, a determining policy, or a management and control policy.

The supervision policy indicates that it is necessary to determine, based on the congestion degree of the service flow, whether the transmission of the service flow needs to be adjusted, and manage and/or control the transmission of the service flow when the transmission of the service flow needs to be adjusted but is not adjusted (for example, not adjusted in a monitoring time period).

The determining policy indicates that it is necessary to determine whether the transmission of the service flow (for example, in the monitoring time period) is at least one of the following: a transmission rate does not decrease, a decrease amplitude of the transmission rate is less than an amplitude threshold, or the transmission rate increases.

When the first network element is the access network device, the management and control policy indicates that it is necessary to manage and/or control the transmission of the service flow (that is, the QoS flow that carries the service flow). This specifically includes performing at least one of the following on the QoS flow: sending the exception report to the session management network element or the user plane network element, discarding the data packet carried in the QoS flow, reducing the transmission priority of the data radio bearer DRB to which the QoS flow is mapped, mapping the QoS flow to the new DRB, or exposing the new network congestion information of the QoS flow.

When the first network element is the user plane network element, the management and control policy indicates that it is necessary to manage and/or control the transmission of the service flow. This specifically includes performing at least one of the following on the service flow: sending the exception report to the session management network element, discarding the data packet in the service flow, sending the alarm notification to the application function network element, or exposing the new network congestion information of the service flow. Alternatively, this specifically includes performing at least one of the following on the service flow: sending the exception report to the session management network element, sending the alarm notification to the application function network element, discarding the data packet in the service flow, or exposing the new network congestion information of the service flow. The managed and/or controlled service flow may alternatively be the QoS flow that carries the service flow.

Optionally, the configuration information may further include information indicating that the first network element that supervises the transmission is the access network device or the user plane network element.

According to a second aspect, a communication method is provided, applied to an application function network element and including: The application function network element sends requirement information. The requirement information indicates that it is necessary to determine, based on a congestion degree of the service flow, whether the transmission of the service flow needs to be adjusted, and manage and/or control the transmission of the service flow when the transmission of the service flow needs to be adjusted but is not adjusted.

It may be understood that the requirement information may be converted into the configuration information on a network side, and finally configured for the first network element.

In a possible design solution, the requirement information may include supervision indication information, and optionally, may further include information indicating the service flow. The information indicating the service flow may be flow description information, specifically, information such as an IP quintuple or an IP triplet of the service flow, and the supervision indication information indicates that it is necessary to determine, based on the congestion degree, whether the transmission needs to be adjusted, and manage and/or control the transmission when the transmission needs to be adjusted but is not adjusted.

Optionally, the requirement information specifically indicates that it is necessary to determine, based on the congestion degree of the service flow, whether the transmission of the service flow needs to be adjusted, and manage and/or control the transmission of the service flow when the transmission of the service flow needs to be adjusted but is not adjusted in a monitoring time period.

Further, the requirement information may further include the monitoring time period.

Optionally, the requirement information may include at least one of the following: a supervision policy, a determining policy, or a management and control policy.

The supervision policy indicates that it is necessary to determine, based on the congestion degree of the service flow, whether the transmission of the service flow needs to be adjusted, and manage and/or control the transmission of the service flow when the transmission of the service flow needs to be adjusted but is not adjusted (for example, not adjusted in a monitoring time period).

The determining policy indicates that it is necessary to determine whether the transmission of the service flow (in the monitoring time period) is at least one of the following: a transmission rate does not decrease, a decrease amplitude of the transmission rate is less than an amplitude threshold, or the transmission rate increases.

When the first network element is the access network device, the management and control policy indicates that it is necessary to manage and/or control the transmission of the service flow (that is, the QoS flow that carries the service flow). This specifically includes performing at least one of the following on the QoS flow: sending the exception report to the session management network element or the user plane network element, discarding the data packet carried in the QoS flow, reducing the transmission priority of the data radio bearer DRB to which the QoS flow is mapped, mapping the QoS flow to the new DRB, or exposing the new network congestion information of the QoS flow.

When the first network element is the user plane network element, the management and control policy indicates that it is necessary to manage and/or control the transmission of the service flow. This specifically includes performing at least one of the following on the service flow: sending the exception report to the session management network element, discarding the data packet in the service flow, sending the alarm notification to the application function network element, or exposing the new network congestion information of the service flow. Alternatively, this specifically includes performing at least one of the following on the service flow: sending the exception report to the session management network element, sending the alarm notification to the application function network element, discarding the data packet in the service flow, or exposing the new network congestion information of the service flow. The managed and/or controlled service flow may alternatively be the QoS flow that carries the service flow.

Optionally, the requirement information may further include information indicating that the first network element that supervises the transmission is the access network device or the user plane network element.

In a possible design solution, that the application function network element sends the requirement information includes: The application function network element sends an application function network element request message to a policy control network element corresponding to the service flow, where the application function network element request message includes the requirement information to reuse existing signaling for implementation, to reduce implementation difficulty, or new signaling may be used to decouple from the existing signaling, so that information transmission is more flexible. Specifically, the application function network element may directly send, to the policy control network element, the request message that carries the requirement information, or the application function network element sends, to the policy control network element by using a network exposure network element, the request information that carries the requirement information.

In addition, for effect of the method according to the second aspect, refer to the related description of the first aspect. Details are not described again.

According to a third aspect, a communication method is provided, applied to a policy control network element and including: The policy control network element determines policy information of transmission of a service flow, and sends the policy information to a session management network element corresponding to the service flow. The policy information indicates that it is necessary to determine, based on a congestion degree of the service flow, whether the transmission of the service flow needs to be adjusted, and manage and/or control the transmission of the service flow when the transmission of the service flow needs to be adjusted but is not adjusted.

It may be understood that the policy information may be converted by the session management network element into the configuration information, and finally configured for the first network element.

In a possible design solution, the policy information may include supervision indication information, and optionally, may further include information indicating the service flow. The information indicating the service flow may be flow description information, specifically, information such as an IP quintuple or an IP triplet of the service flow, and the supervision indication information indicates that it is necessary to determine, based on the congestion degree, whether the transmission needs to be adjusted, and manage and/or control the transmission when the transmission needs to be adjusted but is not adjusted.

Optionally, the policy information specifically indicates that it is necessary to determine, based on the congestion degree of the service flow, whether the transmission of the service flow needs to be adjusted, and manage and/or control the transmission of the service flow when the transmission of the service flow needs to be adjusted but is not adjusted in a monitoring time period.

Further, the policy information may further include the monitoring time period.

Optionally, the policy information may include at least one of the following: a supervision policy, a determining policy, or a management and control policy.

The supervision policy indicates that it is necessary to determine, based on the congestion degree of the service flow, whether the transmission of the service flow needs to be adjusted, and manage and/or control the transmission of the service flow when the transmission of the service flow needs to be adjusted but is not adjusted (for example, not adjusted in a monitoring time period).

The determining policy indicates that it is necessary to determine whether the transmission of the service flow (in the monitoring time period) is at least one of the following: a transmission rate does not decrease, a decrease amplitude of the transmission rate is less than an amplitude threshold, or the transmission rate increases.

When the first network element is the access network device, the management and control policy indicates that it is necessary to manage and/or control the transmission of the service flow (that is, the QoS flow that carries the service flow). This specifically includes performing at least one of the following on the QoS flow: sending the exception report to the session management network element or the user plane network element, discarding the data packet carried in the QoS flow, reducing the transmission priority of the data radio bearer DRB to which the QoS flow is mapped, mapping the QoS flow to the new DRB, or exposing the new network congestion information of the QoS flow.

When the first network element is the user plane network element, the management and control policy indicates that it is necessary to manage and/or control the transmission of the service flow. This specifically includes performing at least one of the following on the service flow: sending the exception report to the session management network element, discarding the data packet in the service flow, sending the alarm notification to the application function network element, or exposing the new network congestion information of the service flow. Alternatively, this specifically includes performing at least one of the following on the service flow: sending the exception report to the session management network element, sending the alarm notification to the application function network element, discarding the data packet in the service flow, or exposing the new network congestion information of the service flow. The managed and/or controlled service flow may alternatively be the QoS flow that carries the service flow.

Optionally, the policy information may further include information indicating that the first network element that supervises the transmission is the access network device or the user plane network element.

In a possible design solution, that the policy control network element determines the policy information includes: The policy control network element receives, from an application function network element of the service flow, requirement information of the transmission of the service flow, and determines the policy information based on the requirement information. The requirement information indicates that it is necessary to determine, based on a congestion degree of the service flow, whether the transmission of the service flow needs to be adjusted, and manage and/or control the transmission of the service flow when the transmission of the service flow needs to be adjusted but is not adjusted.

In a possible design solution, the requirement information may include supervision indication information, and optionally, may further include information indicating the service flow. The information indicating the service flow may be flow description information, specifically, information such as an IP quintuple or an IP triplet of the service flow, and the supervision indication information indicates that it is necessary to determine, based on the congestion degree, whether the transmission needs to be adjusted, and manage and/or control the transmission when the transmission needs to be adjusted but is not adjusted.

Optionally, the requirement information specifically indicates that it is necessary to determine, based on the congestion degree of the service flow, whether the transmission of the service flow needs to be adjusted, and manage and/or control the transmission of the service flow when the transmission of the service flow needs to be adjusted but is not adjusted in a monitoring time period.

Further, the requirement information may further include the monitoring time period.

Optionally, the requirement information may include at least one of the following: a supervision policy, a determining policy, or a management and control policy.

The supervision policy indicates that it is necessary to determine, based on the congestion degree of the service flow, whether the transmission of the service flow needs to be adjusted, and manage and/or control the transmission of the service flow when the transmission of the service flow needs to be adjusted but is not adjusted (for example, not adjusted in a monitoring time period).

The determining policy indicates that it is necessary to determine whether the transmission of the service flow (for example, in the monitoring time period) is at least one of the following: a transmission rate does not decrease, a decrease amplitude of the transmission rate is less than an amplitude threshold, or the transmission rate increases.

When the first network element is the access network device, the management and control policy indicates that it is necessary to manage and/or control the transmission of the service flow (that is, the QoS flow that carries the service flow). This specifically includes performing at least one of the following on the QoS flow: sending the exception report to the session management network element or the user plane network element, discarding the data packet carried in the QoS flow, reducing the transmission priority of the data radio bearer DRB to which the QoS flow is mapped, mapping the QoS flow to the new DRB, or exposing the new network congestion information of the QoS flow.

When the first network element is the user plane network element, the management and control policy indicates that it is necessary to manage and/or control the transmission of the service flow. This specifically includes performing at least one of the following on the service flow: sending the exception report to the session management network element, discarding the data packet in the service flow, sending the alarm notification to the application function network element, or exposing the new network congestion information of the service flow. Alternatively, this specifically includes performing at least one of the following on the service flow: sending the exception report to the session management network element, sending the alarm notification to the application function network element, discarding the data packet in the service flow, or exposing the new network congestion information of the service flow. The managed and/or controlled service flow may alternatively be the QoS flow that carries the service flow.

Optionally, the requirement information may further include information indicating that the first network element that supervises the transmission is the access network device or the user plane network element.

In a possible design solution, after the policy control network element sends the policy information to the session management network element corresponding to the service flow, the method according to the third aspect may further include: The policy control network element receives indication information from the session management network element, and reduces a quality of service QoS level of a PCC rule according to the indication information. The indication information indicates that the transmission of the service flow corresponding to the policy and charging control PCC rule is abnormal.

In addition, for effect of the method according to the third aspect, refer to the related description of the first aspect. Details are not described again.

According to a fourth aspect, a communication method is provided, applied to a user plane network element and including: When the user plane network element exposes network congestion information of a quality of service QoS flow, the user plane network element receives an exception report from an access network device corresponding to the QoS flow, where the exception report indicates that transmission of a data packet carried in the QoS flow is abnormal. When the transmission of the data packet carried in the QoS flow is abnormal, the user plane network element manages and/or controls transmission of the QoS flow.

For an explanation of the exception report, refer to the related description of the first aspect. Details are not described again.

In a possible design solution, that the user plane network element manages and/or controls the transmission of the QoS flow includes: The user plane network element manages and/or controls the transmission of the QoS flow in response to configuration information, where the configuration information indicates that when the network congestion information of the QoS flow is exposed but the transmission of the data packet carried in the QoS flow is abnormal, the transmission of the QoS flow needs to be managed and/or controlled.

Optionally, the method according to the fourth aspect may further include: The user plane network element receives the configuration information from a session management network element corresponding to the QoS flow.

Further, that the user plane network element manages and/or controls the transmission of the QoS flow includes: The user plane network element performs at least one of the following operations on the QoS flow: sending the exception report to the session management network element, sending an alarm notification to an application function network element, discarding the data packet carried in the QoS flow, or exposing new network congestion information of the QoS flow. The session management network element is a network element corresponding to the QoS flow, the exception report indicates that the transmission of the data packet carried in the QoS flow is abnormal, the application function network element is a network element corresponding to a service carried in the QoS flow, and the alarm notification indicates that transmission of a data packet of the service is abnormal.

It may be understood that, the user plane network element may also map the QoS flow to the corresponding service flow, for example, the service flow carried by the QoS flow, and the user plane network element manages and/or controls the transmission of the service flow.

In addition, for effect of the method according to the fourth aspect, refer to the related description of the first aspect. Details are not described again.

According to a fifth aspect, a communication method is provided. The method includes: A policy control network element obtains policy information of transmission of a service flow, and sends the policy information to a session management network element. The session management network element sends configuration information of the service flow to a first network element based on the policy information. The first network element obtains network congestion information of the service flow, and in response to the configuration information, if the first network element determines, based on the network congestion information of the service flow, that the transmission of the service flow needs to be adjusted but is not adjusted, the first network element manages and/or controls the transmission of the service flow.

The policy information indicates that it is necessary to determine, based on a congestion degree of the service flow, whether the transmission of the service flow needs to be adjusted, and manage and/or control the transmission of the service flow when the transmission of the service flow needs to be adjusted but is not adjusted. The first network element is an access network device or a user plane network element. The configuration information indicates that it is necessary to determine, based on a congestion degree of the service flow, whether the transmission of the service flow needs to be adjusted, and manage and/or control the transmission of the service flow when the transmission of the service flow needs to be adjusted but is not adjusted.

In a possible design solution, the policy information may include supervision indication information, and optionally, may further include information indicating the service flow. The supervision indication information indicates that it is necessary to determine, based on the congestion degree, whether the transmission needs to be adjusted, and manage and/or control the transmission when the transmission needs to be adjusted but is not adjusted.

Optionally, the policy information specifically indicates that it is necessary to determine, based on the congestion degree of the service flow, whether the transmission of the service flow needs to be adjusted, and manage and/or control the transmission of the service flow when the transmission of the service flow needs to be adjusted but is not adjusted in a monitoring time period.

Further, the policy information may further include the monitoring time period.

In a possible design solution, that the policy control network element obtains the policy information includes: The policy control network element receives, from an application function network element of the service flow, requirement information of the transmission of the service flow, and determines the policy information based on the requirement information. The requirement information indicates that it is necessary to determine, based on a congestion degree of the service flow, whether the transmission of the service flow needs to be adjusted, and manage and/or control the transmission of the service flow when the transmission of the service flow needs to be adjusted but is not adjusted.

In a possible design solution, the requirement information may include supervision indication information, and optionally, may further include information indicating the service flow. The supervision indication information indicates that it is necessary to determine, based on the congestion degree, whether the transmission needs to be adjusted, and manage and/or control the transmission when the transmission needs to be adjusted but is not adjusted.

Optionally, the requirement information specifically indicates that it is necessary to determine, based on the congestion degree of the service flow, whether the transmission of the service flow needs to be adjusted, and manage and/or control the transmission of the service flow when the transmission of the service flow needs to be adjusted but is not adjusted in a monitoring time period.

Further, the requirement information may further include the monitoring time period.

In a possible design solution, after the policy control network element sends the policy information to the session management network element corresponding to the service flow, the method according to the fifth aspect may further include: The policy control network element receives indication information from the session management network element, and reduces a quality of service QoS level of a PCC rule according to the indication information. The indication information indicates that the transmission of the service flow corresponding to the policy and charging control PCC rule is abnormal.

Optionally, the configuration information includes supervision indication information, and optionally, may further include information indicating the service flow. The supervision indication information may indicate that it is necessary to determine, based on the congestion degree, whether the transmission needs to be adjusted, and manage and/or control the transmission when the transmission needs to be adjusted but is not adjusted.

Further, the configuration information may further indicate a monitoring time period. In response to the configuration information, if the first network element determines, based on the network congestion information of the service flow, that the transmission of the service flow needs to be adjusted but is not adjusted, that the first network element manages and/or controls the transmission of the service flow includes: In response to the configuration information, if the first network element determines, based on the network congestion information of the service flow, that the transmission of the service flow needs to be adjusted but is not adjusted in the monitoring time period, the first network element manages and/or controls the transmission of the service flow.

In a possible design solution, that the first network element determines that the transmission of the service flow is not adjusted includes: The first network element determines that the transmission of the service flow is at least one of the following: a transmission rate does not decrease, a decrease amplitude of the transmission rate is less than an amplitude threshold, or the transmission rate increases.

Optionally, that the first network element determines, based on the network congestion information of the service flow, that the transmission of the service flow needs to be adjusted includes: The first network element may determine, based on the network congestion information of the service flow, that the congestion degree of the service flow is greater than or equal to a congestion degree threshold; or the first network element may determine, based on the network congestion information of the service flow, that an increment of the congestion degree of the service flow is greater than or equal to an increment threshold.

In a possible design solution, the first network element is an access network device, the service flow is carried by a QoS flow, the network congestion information of the service flow is network congestion information of the QoS flow, and that the first network element manages and/or controls the transmission of the service flow includes: The access network device performs at least one of the following on the QoS flow: sending an exception report to a session management network element or a user plane network element, discarding a data packet carried in the QoS flow, reducing a transmission priority of a data radio bearer DRB to which the QoS flow is mapped, mapping the QoS flow to a new DRB, or exposing new network congestion information of the QoS flow.

For example, the session management network element and the user plane network element may be network elements corresponding to the QoS flow, and the exception report may indicate that transmission of the data packet carried in the QoS flow is abnormal. A proportion value represented by the new network congestion information is a sum of a proportion value represented by the network congestion information of the QoS flow and a preset increment proportion value.

Optionally, the exception report may include an identifier of the QoS flow and/or information that indicates that the transmission of the data packet is abnormal.

In a possible design solution, the first network element is a user plane network element, the service flow is carried by a QoS flow, the network congestion information of the service flow is network congestion information of the QoS flow, and that the first network element manages and/or controls the transmission of the service flow includes: The user plane network element performs at least one of the following on the QoS flow: sending an exception report to a session management network element, discarding a data packet carried in the QoS flow, sending an alarm notification to an application function network element, or exposing new network congestion information of the QoS flow.

For example, the session management network element is a network element corresponding to the QoS flow, and the exception report may indicate that transmission of the data packet carried in the QoS flow is abnormal. The application function network element may be a network element corresponding to the service flow, and the alarm notification indicates that transmission of a data packet of a service corresponding to the service flow is abnormal. A proportion value represented by the new network congestion information is a sum of a proportion value represented by the network congestion information of the QoS flow and a preset increment proportion value.

Optionally, the exception report may include an identifier of the QoS flow and/or information that indicates that the transmission of the data packet is abnormal, and the alarm notification may include an identifier of the service and/or information that indicates that the transmission of the data packet is abnormal.

In a possible design solution, the first network element is a user plane network element, and that the first network element manages and/or controls the transmission of the service flow includes: The user plane network element performs at least one of the following on the service flow: sending an exception report to a session management network element, sending an alarm notification to an application function network element, discarding a data packet in the service flow, or exposing new network congestion information of the service flow.

For example, the session management network element or the application function network element is a network element corresponding to the service flow, and the exception report or the alarm notification indicates that transmission of a data packet of a service corresponding to the service flow is abnormal. A proportion value represented by the new network congestion information is a sum of a proportion value represented by the network congestion information of the service flow and a preset increment proportion value.

Optionally, the exception report or the alarm notification includes an identifier of the service flow and/or information that indicates that the transmission of the data packet is abnormal.

In addition, for effect of the method according to the fifth aspect, refer to the related description of the first aspect. Details are not described again.

According to a sixth aspect, a communication apparatus is provided. The communication apparatus includes modules configured to perform the method according to any one of the first aspect to the fifth aspect, for example, a transceiver module and a processing module. For example, the transceiver module indicates receiving and sending functions of the communication apparatus, and the processing module is configured to perform a function of the communication apparatus other than the receiving and sending functions.

Optionally, the transceiver module may include a sending module and a receiving module. The sending module is configured to implement the sending function of the communication apparatus according to the sixth aspect, and the receiving module is configured to implement the receiving function of the communication apparatus according to the fifth aspect.

Optionally, the communication apparatus according to the fifth aspect may further include a storage module, and the storage module stores a program or instructions. When the processing module executes the program or the instructions, the communication apparatus is enabled to perform the method according to any one of the first aspect to the fifth aspect.

It may be understood that the communication apparatus according to the sixth aspect may be a network device, may be a chip (system) or another part or component that may be disposed in the network device, or may be an apparatus including the network device. This is not limited in this application.

In addition, for technical effects of the communication apparatus according to the sixth aspect, refer to the technical effects of the foregoing other aspects. Details are not described herein again.

According to a seventh aspect, a communication apparatus is provided. The communication apparatus includes a processor, and the processor is configured to perform the method according to any one of the first aspect to the fifth aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In a possible design solution, the communication apparatus according to the seventh aspect may further include a memory. The memory and the processor may be integrated together, or may be disposed separately. The memory may be configured to store a computer program and/or data in the method according to any one of the first aspect to the fifth aspect.

In this embodiment of this application, the communication apparatus according to the seventh aspect may be the network device according to any one of the first aspect to the fifth aspect, may be a chip (system) or another part or component that may be disposed in the network device, or may be an apparatus including the network device.

In addition, for technical effects of the communication apparatus according to the seventh aspect, refer to the technical effects of the foregoing other aspects. Details are not described herein again.

According to an eighth aspect, a communication apparatus is provided. The communication apparatus includes a processor, where the processor is coupled to a memory, and the processor is configured to execute a computer program stored in the memory, so that the communication apparatus performs the method according to any one of the first aspect to the fifth aspect.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In this embodiment of this application, the communication apparatus according to the eighth aspect may be the network device according to any one of the first aspect to the fifth aspect, may be a chip (system) or another part or component that may be disposed in the network device, or may be an apparatus including the network device.

In addition, for technical effects of the communication apparatus according to the eighth aspect, refer to the technical effects of the foregoing other aspects. Details are not described herein again.

According to a ninth aspect, a communication apparatus is provided, including a processor and a memory. The memory is configured to store a computer program. When the processor executes the computer program, the communication apparatus is enabled to perform the method according to any one of the first aspect to the fifth aspect.

In a possible design solution, the communication apparatus according to the ninth aspect may further include a transceiver. The transceiver may be a transceiver circuit or an interface circuit. The transceiver may be used by the communication apparatus according to the ninth aspect to communicate with another communication apparatus.

In this embodiment of this application, the communication apparatus according to the ninth aspect may be the network device according to any one of the first aspect to the fifth aspect, may be a chip (system) or another part or component that may be disposed in the network device, or may be an apparatus including the network device.

In addition, for technical effects of the communication apparatus according to the ninth aspect, refer to the technical effects of the foregoing other aspects. Details are not described herein again.

According to a tenth aspect, a communication system is provided. The communication system includes at least one of the following: the first network element according to the first aspect, the application function network element according to the second aspect, the policy control network element according to the third aspect, or the policy control network element according to the third aspect.

According to an eleventh aspect, a computer-readable storage medium is provided, including a computer program or instructions. When the computer program or the instructions are run on a computer, the computer is enabled to perform the method according to any one of the first aspect to the fifth aspect.

According to a twelfth aspect, a computer program product is provided, including a computer program or instructions. When the computer program or the instructions are run on a computer, the computer is enabled to perform the method according to any one of the first aspect to the fifth aspect.

### BRIEF DESCRIPTION OF DRAWINGS

FIG. 1 is a diagram of an architecture of a 5GS;
FIG. 2 is a diagram of a scenario of an L4S mechanism;
FIG. 3 is a diagram of an architecture of a communication system according to an embodiment of this application;
FIG. 4 is a schematic flowchart 1 of a communication method according to an embodiment of this application;
FIG. 5A, FIG. 5B, and FIG. 5C are a schematic flowchart 2 of a communication method according to an embodiment of this application;
FIG. 6A, FIG. 6B, and FIG. 6C are a schematic flowchart 3 of a communication method according to an embodiment of this application;
FIG. 7A, FIG. 7B, and FIG. 7C are a schematic flowchart 4 of a communication method according to an embodiment of this application;
FIG. 8 is a diagram 1 of a structure of a communication apparatus according to an embodiment of this application; and
FIG. 9 is a diagram 2 of a structure of a communication apparatus according to an embodiment of this application.

### DESCRIPTION OF EMBODIMENTS

The technical solutions in embodiments of this application may be applied to various communication systems, for example, a wireless network (Wi-Fi) system, a vehicle to everything (vehicle to everything, V2X) communication system, a device-to-device (device-to-device, D2D) communication system, an Internet of Vehicles communication system, a 4th generation (4th generation, 4G) mobile communication system, for example, a long term evolution (long term evolution, LTE) system, a worldwide interoperability for microwave access (worldwide interoperability for microwave access, WiMAX) communication system, a 5th generation (5th generation, 5G) mobile communication system, for example, a new radio (new radio, NR) system, and a future communication system, for example, a 5.5G or 6th generation (6th generation, 6G) mobile communication system.

For ease of understanding, the following first describes technical terms in embodiments of this application.

### 1. 5th generation (5th generation, 5G) mobile communication system (referred to as a 5G system (5G system, 5GS) for short):

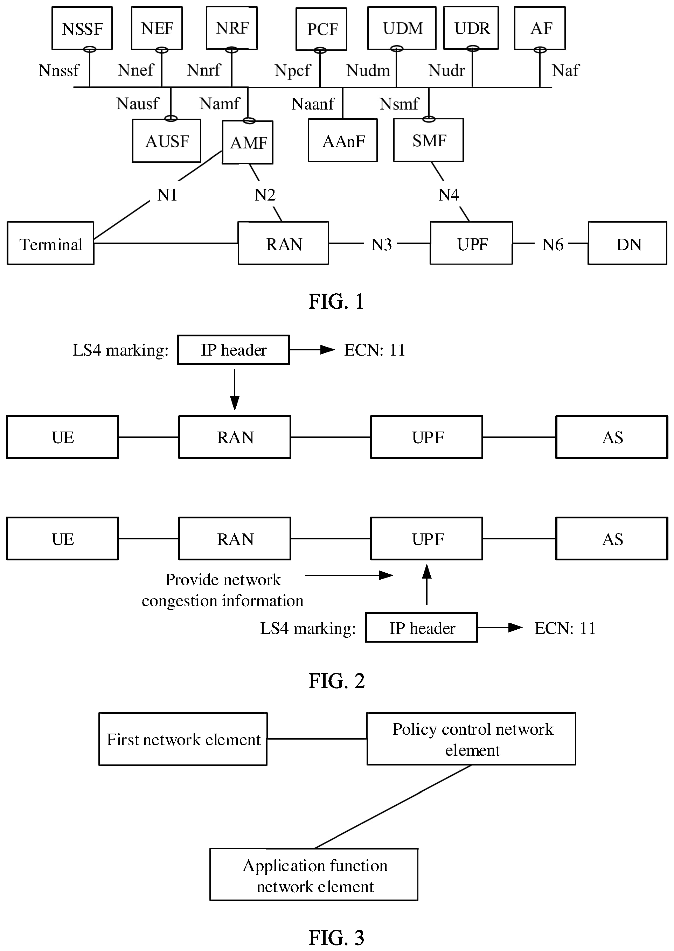

FIG. 1 is a diagram of an architecture of the 5GS. As shown in FIG. 1, the 5GS includes an access network (access network, AN) and a core network (core network, CN), and may further include a terminal.

There may be one or more terminals, for example, a first terminal, a second terminal, and a third terminal. The terminal may be a terminal having receiving and sending functions, or may be a chip or a chip system disposed in the terminal. The terminal may also be referred to as user equipment (user equipment, UE), an access terminal, a subscriber unit (subscriber unit), a subscriber station, a mobile station (mobile station, MS), a mobile console, a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a pad (Pad), a wireless data card, a personal digital assistant (personal digital assistant, PDA) computer, a wireless modem (modem), a handset (handset), a laptop computer (laptop computer), a machine type communication (machine type communication, MTC) terminal, a computer having wireless receiving and sending functions, a virtual reality (virtual reality, VR) terminal, an augmented reality (augmented reality, AR) terminal, a smart home device (for example, a refrigerator, a TV, an air conditioner, or an electricity meter), an intelligent robot, a robotic arm, a workshop device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), an in-vehicle terminal, a roadside unit (roadside unit, RSU) or the like having a terminal function, a flight device (for example, an intelligent robot, a hot air balloon, an unmanned aerial vehicle, or an airplane), or the like. The terminal in this application may alternatively be a vehicle-mounted module, a vehicle-mounted component, a vehicle-mounted chip, or an on-board unit that is built in a vehicle as one or more components or units. The terminal device may alternatively be another device having a function of a terminal. For example, the terminal device may alternatively be a device that functions as a terminal in D2D communication.

A device form of the terminal is not limited in embodiments of this application. An apparatus configured to implement a function of the terminal device may be a terminal device, or may be an apparatus that can support the terminal device in implementing the function, for example, a chip system. The apparatus may be mounted in the terminal device or used together with the terminal device. In embodiments of this application, the chip system may include a chip, or may include a chip and another discrete component.

The foregoing AN is used for implementing an access-related function, may provide a network access function for an authorized user in a specific area, and can determine transmission links with different quality based on a user level, a service requirement, and the like, to perform transmission of user data. The AN forwards a control signal and the user data between the terminal and the CN. The AN may include an access network device, which may also be referred to as a radio access network (radio access network, RAN) device. The CN is mainly responsible for maintaining subscription data of a mobile network, and provides functions such as session management, mobility management, policy management, and security authentication for the terminal. The CN mainly includes the following network elements: a user plane function (user plane function, UPF) network element, an authentication server function (authentication server function, AUSF) network element, an AMF network element, an SMF network element, a network slice selection function (network slice selection function, NSSF) network element, a network exposure function (network exposure function, NEF) network element, a network function repository function (NF repository function, NRF) network element, a policy control function (policy control function, PCF) network element, a unified data management (unified data management, UDM) network element, a unified data repository (unified data repository, UDR), and an application function (application function, AF) network element.

There may be one or more RAN devices, that is, access network apparatuses. The access network apparatus may be a device having wireless receiving and sending functions, or may be a chip or a chip system disposed in the device, and is located in the access network (access network, AN) of the communication system, to provide an access service for the terminal. For example, the access network apparatus may be referred to as a radio access network (radio access network, RAN) device, and may be specifically an access network device in a next-generation mobile communication system, for example, a 6G access network device, for example, a 6G base station. Alternatively, in the next-generation mobile communication system, the access network apparatus may be named in another manner, which falls within the protection scope of embodiments of this application. This is not limited in this application. Alternatively, the access network apparatus may include a gNB in 5G, for example, a new radio (new radio, NR) system, may include one or a group of antenna panels (including a plurality of antenna panels) of a base station in 5G, or may be a network node that forms a gNB, a transmission point (transmission and reception point, TRP, or transmission point, TP), or a transmission measurement function (transmission measurement function, TMF), for example, a central unit (central unit, CU), a distributed unit (distributed unit, DU), a CU-control plane (control plane, CP), or a CU-user plane (user plane, UP), a radio unit (radio unit, RU), an RSU having a base station function, a wired access gateway, or a 5G core network element. Alternatively, the access network apparatus may further include an access point (access point, AP), a wireless relay node, a wireless backhaul node, macro base stations in various forms, a micro base station (also referred to as a small cell), a relay station, an access point, a wearable device, an in-vehicle device, and the like in a wireless fidelity (wireless fidelity, Wi-Fi) system.

The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The UPF network element is mainly responsible for user data processing (forwarding, receiving, charging, and the like). For example, the UPF network element may receive user data from a data network (data network, DN), and forward the user data to the terminal by using the access network device. The UPF network element may alternatively receive the user data from the terminal by using the access network device, and forward the user data to the DN. A DN network element is an operator network that provides a data transmission service for a user, for example, an Internet protocol (Internet protocol, IP) multi-media service (IP multi-media service, IMS), and an Internet (Internet).

The DN may be an external network of an operator, or may be a network controlled by an operator, and is configured to provide a service for the terminal device.

The AUSF network element is mainly configured to perform security authentication on the terminal.

The AMF network element is mainly used for mobility management in the mobile network, for example, user location update, registration of a user to a network, and user handover.

The SMF network element is mainly used for session management in the mobile network, for example, session establishment, modification, and release. A specific function is, for example, allocating an Internet protocol (Internet protocol, IP) address to a user, or selecting a UPF network element that provides a data packet forwarding function.

The PCF network element mainly supports providing a unified policy framework to control a network behavior, and providing a policy rule for a control layer network function, and is also responsible for obtaining policy decision related user subscription information. The PCF network element may provide a policy such as a quality of service (quality of service, QoS) policy or a slice selection policy to the AMF network element and the SMF network element.

The NSSF network element is mainly configured to select a network slice for the terminal.

The NEF network element is mainly used for capability supporting and event exposure.

The UDM network element is mainly configured to store user data, for example, subscription data and authentication/authorization data.

The UDR network element is mainly configured to store structured data. Stored content includes subscription data, policy data, externally exposed structured data, and application-related data.

The AF mainly supports interaction with the CN to provide a service, for example, affecting a data routing decision-making and a policy control function, or providing some third-party services for a network side.

### 2. Quality of service (quality of service, QoS) monitoring (QoS monitoring):

To assist in ultra-reliability low latency communication (ultra-reliability low latency communication) services, the 3rd generation partnership project (3rd generation partnership project, 3GPP) defines a QoS monitoring feature to implement latency measurement for a data packet granularity. A transmission latency of a data packet between UE and a protocol data unit (protocol data unit, PDU) session anchor (PDU Session Anchor, PSA) UPF network element is used as a result of QoS monitoring. The transmission latency includes a latency between the UE and a RAN device on an air interface side and a transmission latency on an N3 link between the RAN device and the UPF network element on a core network side. For the core network side, transmission latencies of uplink and downlink data packets between the RAN device and the UPF network element may be measured based on different granularities, including a single QoS flow granularity of UE, a general packet radio service (general packet radio service, GPRS) tunneling protocol for the user plane (GPRS tunneling protocol for the user plane, GTP-U) tunneling granularity, or the like. A specific granularity to be used depends on an operator policy, a third-party application request, or a policy and charging control (policy and charging control, PCC) rule.

For example, QoS monitoring at the QoS flow granularity is used as an example. The SMF network element activates uplink/downlink data packet latency measurement for a QoS flow in a PDU session establishment or modification procedure. The SMF network element sends a QoS monitoring request to the RAN device and the UPF network element. The QoS monitoring request includes a corresponding monitoring parameter, a measurement reporting trigger condition, and the like. Between the RAN device and the UPF network element, a timestamp, a QoS monitoring indication, and the like are added to a GTP-U layer of the uplink and downlink data packets, to implement data packet latency measurement on the N3 link between the RAN device and the UPF network element. Based on a QoS monitoring request sent by the SMF network element, the PSA UPF network element reports a measurement result to the SMF network element if a threshold condition provided by the SMF network element is met.

### 3. R18 network information exposure:

In the research of R18, how an application layer senses a network condition, or how to expose status information on a network side to an application side is an important problem that needs to be urgently studied. The problem is, for example, how the application layer senses a network status in real time and adjusts content correspondingly, to ensure service experience of a user, and improve network utilization efficiency. For example, network information may be exposed to a third-party application in a form of a control plane capability exposure interface. For example, the network information is directly exposed to the third-party application by using a service-based interface of the UPF network element or by using an NEF network element. Alternatively, a solution in R16 is used. The UPF network element sends the measurement result to the SMF network element, and the SMF network element exposes the network information to the third-party application by using the NEF network element, to implement fast and real-time network information exposure.

It may be understood that because the RAN device may have a security risk, the 3GPP standard usually does not define the following: The RAN directly exposes the network information to the outside. The RAN device needs to first notify a core network node, for example, the UPF network element, of the detected network information, and the UPF network element exposes the network information to the outside. Alternatively, the RAN device may add the network information to a data packet in a form of a user plane for transmission to a UE side or an application server side in an in-band manner, so that the network information can also be exposed.

For ease of understanding, the following is described by using network congestion information exposure as an example.

In an implementation solution, low latency, low loss, scalable throughput (low latency, low loss, scalable throughput, L4S) are introduced into the 3GPP in the industry, and is used for fast and real-time exposure of 5GS network capability information. For example, the RAN device exposes the network congestion information.

Specifically, as shown in FIG. 2, an explicit congestion notification (explicit congestion notification, ECN) uses two information bits in an Internet Protocol version 4 (Internet protocol version 4, IPv4) header as ECN flag bits, to notify a transmit end or a receive end that congestion occurs in a transmission node, so that the transmit end discards a corresponding data packet, to reduce a congestion possibility. For example, a value of a CE flag is set to 11, representing that congestion occurs in a current network transmission process, and other values of the CE flag, such as "00", "01", and "10", indicate whether an ECN capability is supported. In other words, an end side may determine, based on an indication of the ECN flag bit, whether a peer end supports an ECN mechanism, to implement capability negotiation between the two ends.

The L4S is upgraded based on the ECN mechanism, and further extends a function of the original ECN flag bits. For example, a network congestion degree is determined by collecting statistics on a proportion of a quantity of data packets marked as congested (that is, the ECN flag bit is "11") in a plurality of data packets in a period of time. To be specific, although network congestion may not occur currently, a current network condition can still be sensed by using the L4S mechanism, so that the transmit end or the receive end can perform adjustment based on the network congestion information. For example, for a media service, the transmit end may adjust a sending bitrate in real time based on the network congestion information. In addition, the L4S dual-end capability negotiation is also based on the ECN mechanism. The ECN flag bits in the IP header indicate whether the peer end supports the L4S capability.

The R18 standard finally agrees with two execution solutions of L4S, and the RAN device performs L4S, and the UPF network element performs L4S.

### (1) The RAN device performs L4S:

The RAN device may monitor a network congestion condition of a corresponding QoS flow, and perform L4S marking based on the network congestion condition, so that network congestion information is exposed to the outside in an in-band manner. Details are described in the following.

### Downlink scenario:

The RAN device may determine a downlink network congestion condition, for example, a proportion of downlink data packets whose CE flags are "11", based on a network status of a corresponding QoS flow or a network status of a DRB corresponding to the QoS flow, for example, an available bandwidth, bandwidth utilization, or an air interface side data sending queue length. The proportion of the downlink data packets is network congestion information, or the network congestion information indicates a proportion of the downlink data packets whose CE flags are "11". The RAN device may add a corresponding CE flag, for example, "11", to an IP header of a downlink data packet by using the L4S mechanism based on the network congestion condition. The UE performs corresponding statistics collection, for example, collects statistics on a quantity or a proportion of the downlink data packets whose CE flag values are "11", to determine the network congestion condition. For example, a quantity of data packets carrying "11" accounts for 40% of a quantity of all received data packets, and it may be considered that a probability that network congestion occurs on a current network, a current QoS flow, or a DRB corresponding to the current QoS flow is 40%. The UE may notify the transmit end of the network congestion condition by using an upper-layer feedback mechanism, such as acknowledge (acknowledge, ACK) feedback of the transmission control protocol (transmission control protocol, TCP), a feedback report of the real-time control protocol (real-time transport control protocol, RTCP), and an ACK mechanism of the user datagram protocol (user datagram protocol, UDP)-based low-latency Internet transport layer protocol (quick UDP internet connection, QUIC). For example, an application server (application server, AS) receives a network congestion probability from the UE side. Correspondingly, the AS may dynamically adjust the bitrate based on the network congestion condition obtained through feedback, to ensure service experience of the user. It should be understood that how the RAN device determines the network congestion condition of the QoS flow or the DRB corresponding to the QoS flow depends on self-implementation of the RAN device. This is not limited herein.

### Uplink scenario:

The RAN device may determine an uplink network congestion condition based on a network status of a corresponding QoS flow or a network status of a DRB corresponding to the corresponding QoS flow, to add a corresponding CE flag, for example, "11", to an IP header of an uplink data packet by using the L4S mechanism. As the receive end, the AS on the application server side may perform corresponding statistics collection, for example, collect statistics on a quantity or a proportion of uplink data packets whose CE flag values are "11", and feed back the information to the side of the transmit end: the UE, so as to indicate the UE to dynamically adjust the bitrate, thereby ensuring service experience of a user. A specific implementation is similar to that in the downlink scenario, and details are not described herein again.

### (2) The UPF network element performs L4S:

The RAN device may monitor a network congestion condition of a corresponding QoS flow or a DRB corresponding to the QoS flow, and send the network congestion condition to the UPF network element by using a GTP-U layer of an uplink data packet. The UPF network element performs L4S marking based on the network congestion condition provided by the RAN device. A specific implementation is similar to that of the foregoing RAN device. For details, refer to the implementation of the RAN device for understanding. Details are not described again. In this way, the network congestion information can also be exposed to the outside. It should be understood that how the RAN device determines the network congestion condition of the QoS flow or the DRB corresponding to the QoS flow depends on self-implementation of the RAN device. This is not limited herein.

It can be learned that, although the third-party application may obtain the network congestion information on the network side through subscription and perform corresponding adaptive rate adjustment, this cannot completely ensure service experience of the user. For example, because different users compete for resources, if the third-party application still does not adjust the transmission rate or even increases the transmission rate when the network congestion information is exposed, service experience of another user is affected, resulting in loss of transmission fairness.

For the foregoing technical problems, embodiments of this application provide the following technical solutions.

The following describes the technical solutions of this application with reference to the accompanying drawings.

In embodiments of this application, "indication" may include a direct indication and an indirect indication, or may include an explicit indication and an implicit indication. Information indicated by a piece of information (for example, the first indication information, the second indication information, or the third indication information below) is referred to as to-be-indicated information. In a specific implementation process, the to-be-indicated information is indicated in a plurality of manners. By way of example and not limitation, the to-be-indicated information may be directly indicated. For example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, specified in a protocol), to reduce indication overheads to some extent. In addition, a common part of all pieces of information may further be identified and indicated in a unified manner, to reduce indication overheads caused by separately indicating same information.

In addition, specific indication manners may alternatively be various existing indication manners, for example, but not limited to, the foregoing indication manners and various combinations thereof. For details of the various indication manners, refer to the conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

It should be understood that the to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in embodiments of this application. The sending periodicities and/or the sending occasions of these pieces of sub-information may be predefined, for example, predefined according to a protocol, or may be configured by a transmit end device by sending configuration information to a receive end device.

"Predefinition" or "pre-configuration" may be implemented by pre-storing corresponding code or a corresponding table in a device, or may be implemented in another manner that may be used for indicating related information. A specific implementation thereof is not limited in embodiments of this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in embodiments in this application.

The "protocol" in embodiments of this application may be a protocol family in the communication field, a standard protocol with a frame structure similar to the protocol family, or a related protocol applied to a future communication system. This is not specifically limited in embodiments of this application.

In embodiments of this application, descriptions such as "when ...", "in a case of ...", and "if" all mean that a device performs corresponding processing in an objective case, and are not intended to limit time. The descriptions do not mean that the device is required to have a determining action during implementation, and do not mean any other limitation.

In descriptions of embodiments of this application, unless otherwise stated, "/" means an "or" relationship between associated objects, for example, A/B may represent A or B. The term "and/or" in embodiments of this application describes only an association relationship between associated objects, and indicates that three relationships may exist. For example, A and/or B may represent three cases: Only A exists, both A and B exist, and only B exists, where A and B may be singular or plural. In addition, in the descriptions of embodiments of this application, unless otherwise specified, "a plurality of" means two or more. "At least one of the following items (pieces)" or a similar expression thereof means any combination of these items, including a singular item (piece) or any combination of plural items (pieces). For example, at least one of a, b, or c may indicate: a, b, c, a-b, a-c, b-c, or a-b-c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

The network architecture and the service scenario described in embodiments of this application are intended to describe the technical solutions in embodiments of this application more clearly, and do not constitute a limitation on the technical solutions provided in embodiments of this application. A person of ordinary skill in the art may learn that, with evolution of the network architecture and emergence of new service scenarios, the technical solutions provided in embodiments of this application are also applicable to similar technical problems.

For ease of understanding of embodiments of this application, a communication system to which embodiments of this application are applicable is first described in detail by using a communication system shown in FIG. 3 as an example. For example, FIG. 3 is a diagram of an architecture of a communication system to which a communication method according to embodiments of this application is applicable.

As shown in FIG. 3, the communication system mainly includes a first network element, a policy control network element, and an application function network element.

For example, the first network element may be a network element related to a user plane, for example, an access network device or a user plane network element. The access network device may be the foregoing RAN device, or in a future communication system, the access network device may also be replaced with another network element with a corresponding function. The user plane network element may be the foregoing UPF network element, or in a future communication system, the user plane network element may be replaced with another network element with a corresponding function. The policy control network element may be the foregoing PCF network element, or in a future communication system, the policy control network element may be replaced with another network element with a corresponding function. The application function network element may be the foregoing AF, or in a future communication system, the application function network element may be replaced with another network element with a corresponding function.

In the communication system, the application function network element can configure, by using the policy control network element, the first network element to execute a policy defined in this application. For example, the first network element may obtain network congestion information of a service flow, to determine a possibility of network congestion and perform supervision. In this case, when a possibility that network congestion occurs reaches a degree that the application side needs to reduce the possibility by adjusting transmission of the service flow, if the first network element detects that the transmission of the service flow is not adjusted, the first network element can manage and/or control the transmission of the service flow, to avoid network congestion, thereby ensuring user experience.

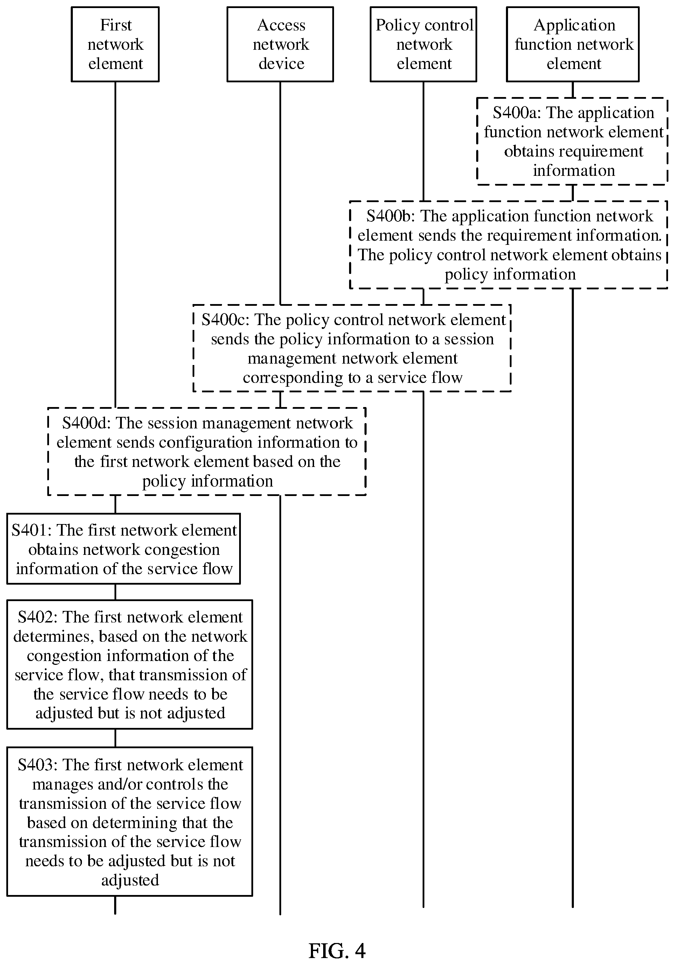

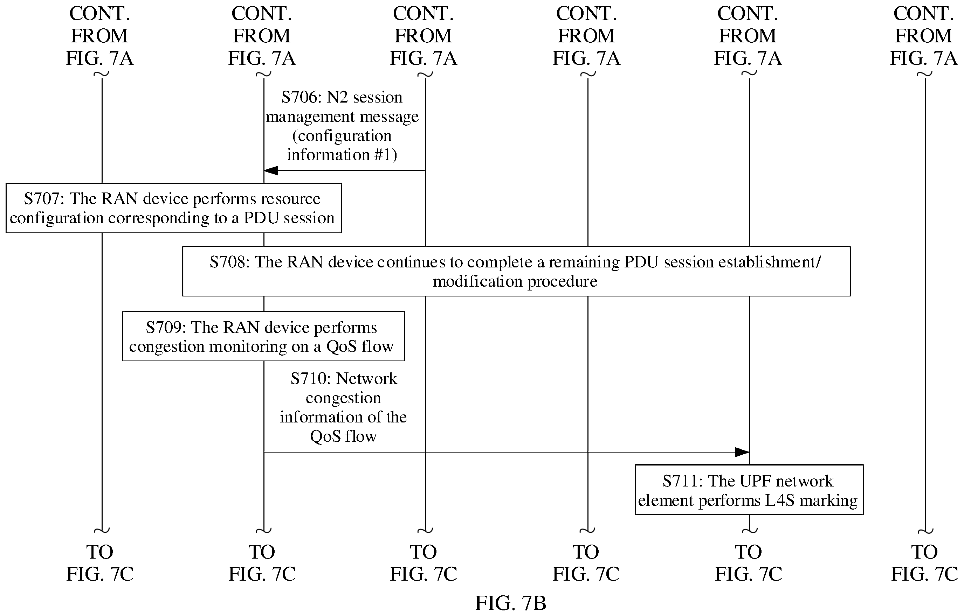

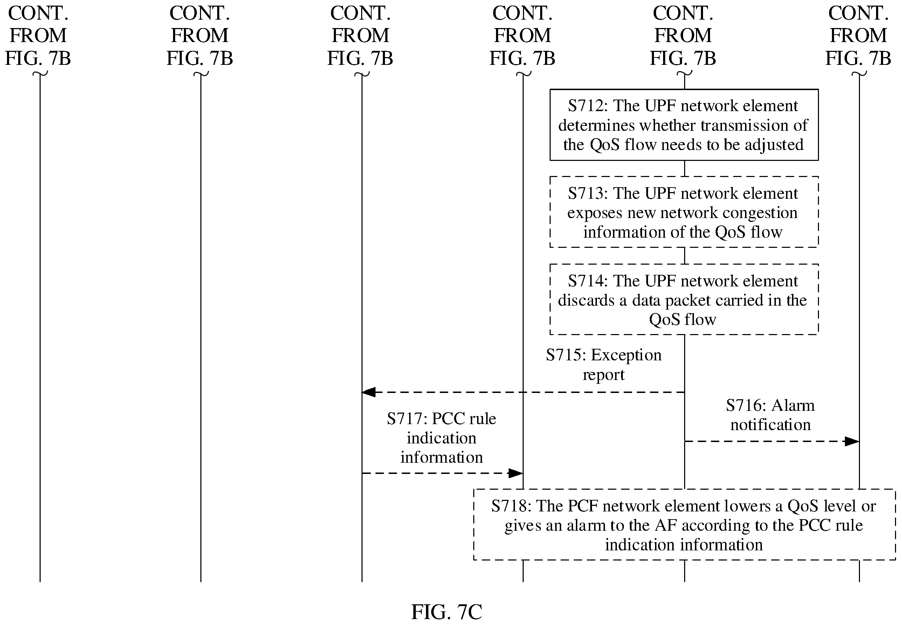

With reference to FIG. 4 to FIG. 7A, FIG. 7B, and FIG. 7C, the following describes, in detail by using method embodiments, an interaction procedure between network elements/devices in the foregoing communication system. The communication method provided in embodiments of this application is applicable to the foregoing communication system, and is specifically applied to various scenarios mentioned in the foregoing communication system. The following provides detailed descriptions.

FIG. 4 is a schematic flowchart 1 of a communication method according to an embodiment of this application. The communication method is applicable to the foregoing communication system, and mainly relates to interaction among a first network element, a policy control network element, and an application function network element.

As shown in FIG. 4, a procedure of the communication method is as follows.

S401: The first network element obtains network congestion information of a service flow.

The service flow may be a data flow including data of a service (for example, a video service or an audio service). The data flow may be identified by an IP quintuple/IP triplet of a data packet, a type of service (type of service, ToS) of an IPv4 header, a flow label of an IPv6 header, and/or the like. Therefore, the IP quintuple/IP triplet/ToS/flow label, or the like is also referred to as information indicating the service flow, or flow description information of the service flow. One service may have one or more service flows. These service flows may exclusively use respective QoS flows or share a QoS flow (for example, these service flows share the QoS flow together, or share the QoS flow with a service flow of another service). Therefore, the service flow may also be represented by a QoS flow that carries the service flow.

For example, when the first network element is an access network device, the access network device usually does not sense a specific service. Therefore, for the access network device, the service flow may be a QoS flow that carries the service flow.

For another example, when the first network element is a user plane network element, the user plane network element may sense a service flow and a QoS flow corresponding to the service flow. Therefore, if the user plane network element performs supervision by using a service flow as a granularity, for the user plane network element, the service flow may be a service flow of a known service; or if the user plane network element performs supervision by using a QoS flow as a granularity, for the user plane network element, the service flow may be a QoS flow that carries the service flow.

The network congestion information of the service flow may indicate a congestion degree of the service flow, or a congestion level, or a congestion degree of a current network. The network congestion information may be specifically a proportion value, for example, may indicate a probability of network congestion. For example, if the network congestion information of the service flow is a proportion value of 32%, it indicates that network congestion may occur at a probability of 32%. If the network congestion information of the service flow is a proportion value of 45%, it indicates that network congestion may occur at a probability of 45%. By analogy, a larger value of the network congestion information indicates a higher probability of network congestion.

It should be understood that, that the network congestion information of the service flow is a proportion value is merely an example, and is not used as a limitation. For example, the network congestion information of the service flow may alternatively be a non-proportion value, for example, 30, and may be converted into a proportion value, so as to indicate that a probability of network congestion is 30%.

If the first network element is the access network device, it can be learned from the foregoing description that the network congestion information of the service flow may be network congestion information of the QoS flow that carries the service flow, or network congestion information of a DRB corresponding to the QoS flow that carries the service flow. Specifically, the access network device may determine the network congestion information of the QoS flow based on a network status of the QoS flow or a network status of the DRB corresponding to the QoS flow, for example, an available bandwidth, bandwidth utilization, or an air interface side data sending queue length. In addition, the access network device may expose the network congestion information of the QoS flow, or send the network congestion information of the QoS flow to the user plane network element, so that the user plane network element exposes the network congestion information of the QoS flow.

If the first network element is the user plane network element, it can be learned from the foregoing description that the network congestion information of the service flow may be network congestion information of a service flow of a known service, or may be network congestion information of the QoS flow that carries the service flow, or may be network congestion information of a DRB corresponding to the QoS flow that carries the service flow. Specifically, the access network device may determine the network congestion information of the QoS flow based on the network status of the QoS flow or the network status of the DRB corresponding to the QoS flow, and send the network congestion information of the QoS flow to the user plane network element. Correspondingly, the user plane network element receives the network congestion information of the QoS flow from the access network device. Optionally, the user plane network element may further map the network congestion information of the QoS flow to the network congestion information of the service flow based on a bearer relationship between the QoS flow and the service flow.

It may be understood that the foregoing description is provided by using the network congestion information as an example, and is not used as a limitation. There may be another implementation. For example, when obtaining the network congestion information of the QoS flow/service flow, the first network element may further convert the network congestion information of the QoS flow/service flow into a congestion level. For example, the network congestion information of the QoS flow/service flow is 32%, which belong to a level of 30% to 40%. Therefore, it may be determined that the congestion level of the QoS flow/service flow is 30% or 40%, level 1/level 2, or the like. A higher level also indicates a higher probability of network congestion.

S402: The first network element determines, based on the network congestion information of the service flow, that transmission of the service flow needs to be adjusted but is not adjusted.

S403: The first network element manages and/or controls the transmission of the service flow based on determining that the transmission of the service flow needs to be adjusted but is not adjusted.

The following describes S402 and S403 in detail.

Performing S402 and S403 by the first network element may be triggered by configuration information (denoted as configuration information #1) of the service flow delivered by a session management network element, to perform supervision on demand, thereby avoiding resource wastes. The configuration information #1 may indicate the first network element to determine, based on the congestion degree of the service flow, whether the transmission of the service flow needs to be adjusted, and manage and/or control the transmission of the service flow when the transmission of the service flow needs to be adjusted but is not adjusted, or indicate the first network element to manage and/or control the transmission of the service flow. Managing and/or controlling the transmission of the service flow includes: The first network element determines, based on the congestion degree of the service flow, whether the transmission of the service flow needs to be adjusted, and manages and/or controls the transmission of the service flow when the transmission of the service flow needs to be adjusted but is not adjusted.

For example, the configuration information #1 may include supervision indication information, and optionally, may further include information indicating the service flow. In other words, the information indicating the service flow may be decoupled from the supervision indication information, and the two may be combined to indicate a function of the configuration information #1, so that an indication manner is more flexible.

When the first network element is the access network device, or when the first network element is the user plane network element, and the user plane network element performs supervision by using the QoS flow as a granularity, the information indicating the service flow may be the QoS flow that carries the service flow, or an identifier of the QoS flow corresponding to the service flow, for example, a QoS flow identifier (QoS flow identifier, QFI), or any other possible identifier. This is not limited herein. When the first network element is the user plane network element, and the user plane network element performs supervision by using the service flow as a granularity, the information indicating the service flow may be flow description information of the service flow, for example, the foregoing IP quintuple/IP triplet/ToS/flow label.

The supervision indication information may be implemented by reusing an existing information element in the configuration information #1, or may be a newly defined information element. The supervision indication information may be a character string of one or more bits or a bitmap, and indicates that it is necessary to determine, based on the congestion degree, whether the transmission needs to be adjusted, and manage and/or control the transmission when the transmission needs to be adjusted but is not adjusted, or indicate to manage and/or control the transmission based on the congestion degree and the transmission. Specifically, the supervision indication information indicates that it is necessary to determine, based on the congestion degree, whether the transmission needs to be adjusted, and manage and/or control the transmission when the transmission needs to be adjusted but is not adjusted.

It may be understood that the configuration information #1 may alternatively not include the information indicating the service flow. For example, the service flow is pre-aligned between the first network element and the network, and the first network element may perform a supervision operation on the service flow by default according to the supervision indication information. Alternatively, the configuration information #1 may be sent to the first network element together with the information indicating the service flow, to ensure that the first network element can perform the supervision operation indicated by the configuration information on the service flow. Alternatively, the configuration information #1 may not include the supervision indication information. For example, the configuration information #1 may alternatively be of a new information type, and the new information type implicitly indicates the supervision operation.

Optionally, the configuration information #1 may further indicate a monitoring time period, for example, include information indicating the monitoring time period, where the information indicating the monitoring time period is used together with the information indicating the service flow and the supervision indication information to indicate that it is necessary to determine, based on the congestion degree of the service flow, whether the transmission of the service flow needs to be adjusted, and manage and/or control the transmission of the service flow when the transmission of the service flow needs to be adjusted but is not adjusted in the monitoring time period. The monitoring time period may be a specified time period, for example, 10:40 to 10:50, or may be a periodic time period, for example, 5-minute monitoring is performed every 10 minutes, or may be a length of a time window for performing monitoring, for example, 10 minutes, that is, monitoring whether the service flow is adjusted within 10 minutes. This is not limited. It should be understood that the configuration information #1 may alternatively not indicate the monitoring time period. For example, the monitoring time period may be preconfigured locally on the first network element or predefined locally on the first network element in a protocol.

It may be further understood that, that it is necessary to determine, based on the congestion degree of the service flow, whether the transmission of the service flow needs to be adjusted, and manage and/or control the transmission of the service flow when the transmission of the service flow needs to be adjusted but is not adjusted (for example, not adjusted in the monitoring time period) may be understood as a supervision policy, or the supervision policy may indicate the information, for example, indicate that it is necessary to determine, based on the congestion degree of the service flow, whether the transmission of the service flow needs to be adjusted, and manage and/or control the transmission of the service flow when the transmission of the service flow needs to be adjusted but is not adjusted (for example, not adjusted in the monitoring time period). Alternatively, the policy may be replaced with a policy with any other possible name. The supervision policy may be carried by the configuration information #1, or may be separately delivered, or may be preconfigured locally on the first network element, or may be predefined locally on the first network element in a protocol. A specific implementation is not limited.

In addition, the configuration information #1 is merely an example name, and may be replaced with any possible name, for example, supervision configuration information or transmission management and control configuration information. This is not limited.

The first network element may receive the configuration information #1 in advance. For example, the first network element is the access network device. In a session establishment or modification process, the access network device may receive an N2 message from the session management network element, and the N2 message may carry the configuration information #1. For another example, the first network element is the user plane network element. In an N4 session establishment process, the user plane network element may receive an N4 message from the session management network element, and the N4 message may carry the configuration information #1.

In this way, in response to the configuration information #1, the first network element manages and/or controls the transmission based on the network congestion information of the service flow and the transmission of the service flow. Specifically, in response to the configuration information #1, the first network element determines, based on the network congestion information of the service flow, that the transmission of the service flow needs to be adjusted but is not adjusted (for example, is not adjusted in the monitoring time period), and the first network element may manage and/or control the transmission of the service flow based on determining that the transmission of the service flow needs to be adjusted but is not adjusted. The following provides description in detail.

The first network element may determine, based on the network congestion information of the service flow, whether the transmission of the service flow needs to be adjusted.

For example, the first network element may determine, based on the network congestion information of the service flow, whether the congestion degree of the service flow is greater than or equal to the congestion degree threshold. If the congestion degree of the service flow is greater than or equal to the congestion degree threshold, it indicates that the transmission of the service flow needs to be adjusted, or the transmission of the service flow needs to be correspondingly adjusted, for example, a transmission rate of the service flow needs to be correspondingly reduced; and otherwise, no adjustment is required. For example, if the network congestion information of the service flow is 40%, it indicates that the congestion degree or the congestion level of the service flow is 40%. In this case, if the congestion degree threshold is 35%, it indicates that the transmission of the service flow needs to be adjusted.

For another example, the first network element may also determine, based on the network congestion information of the service flow, whether an increment of the congestion degree of the service flow is greater than or equal to an increment threshold. If the increment of the congestion degree of the service flow is greater than or equal to the increment threshold, it indicates that the transmission of the service flow needs to be adjusted, or the transmission of the service flow needs to be correspondingly adjusted, for example, a transmission rate of the service flow needs to be correspondingly reduced; and otherwise, no adjustment is required. For example, if the network congestion information that is of the service flow and that is determined in S401 is 40%, and the network congestion information that is of the service flow and that is historically determined before S401 is 20%, an increment of the congestion degree of the service flow is 20%. In this case, if the increment threshold is 15%, it indicates that the transmission of the service flow needs to be adjusted.

For another example, the first network element may also determine, based on the network congestion information of the service flow, whether the congestion degree of the service flow increases. If the congestion degree of the service flow increases, it indicates that the transmission of the service flow needs to be correspondingly adjusted, for example, a transmission rate of the service flow needs to be correspondingly reduced; and otherwise, no adjustment is required. For example, the network congestion information that is of the service flow and that is determined in S401 is 40%, and the network congestion information that is of the service flow and that is historically determined before S401 is 30%. In this case, the congestion degree of the service flow increases, indicating that the transmission of the service flow needs to be adjusted.

In other words, if the congestion degree of the service flow is greater than or equal to the congestion degree threshold, or the increment of the congestion degree of the service flow is greater than or equal to the increment threshold, it may indicate that a possibility of network congestion caused by the transmission of the service flow is high. In this way, the first network element can effectively avoid network congestion by monitoring and/or adjusting the transmission of the service flow on this basis.

When the transmission of the service flow needs to be adjusted, the first network element may determine whether the transmission of the service flow (in the monitoring time period) is at least one of the following: a transmission rate does not decrease, a decrease amplitude of the transmission rate is less than an amplitude threshold, or the transmission rate increases.

That the transmission rate does not decrease or the transmission rate increases means that the network congestion degree of the service flow increases but the transmission rate of the service flow does not decrease or the transmission rate of the service flow increases, or that the network degree of the QoS flow increases but the transmission rate of the QoS flow does not decrease or the transmission rate of the service flow increases.

The amplitude threshold may indicate an upper limit of an increase in the network congestion degree, that is, if the upper limit is reached, the transmission needs to be managed and/or controlled. The amplitude threshold corresponds to the network congestion information of the service flow, and a higher congestion level indicated by the network congestion information of the service flow indicates a larger amplitude threshold corresponding to the congestion level. For example, the congestion level indicated by the network congestion information of the service flow is 40%, and the amplitude threshold corresponding to the congestion level may be 15%. To be specific, when the probability of network congestion reaches 40%, an application side needs to reduce the transmission rate to reduce the probability of network congestion by at least 15%, or reduce the transmission rate by 15%. For another example, the congestion level indicated by the network congestion information of the service flow is 50%, and the amplitude threshold corresponding to the congestion level may be 25%. To be specific, when the probability of network congestion reaches 50%, the application side needs to reduce the transmission rate, for example, reduce the transmission rate by 25%. For another example, the network congestion information of the service flow increases by 15%, and the corresponding amplitude threshold may be 15%. To be specific, when the probability of network congestion increases by 15%, the application side needs to reduce the transmission rate, to reduce network congestion by 15%.

It should be understood that, determining whether the transmission of the service flow is at least one of the foregoing may also be understood as a determining policy. To be specific, the determining policy may also indicate the information, for example, indicate that it is necessary to determine whether the transmission of the service flow (in the monitoring time period) is at least one of the following: a transmission rate does not decrease, a decrease amplitude of the transmission rate is less than an amplitude threshold, or the transmission rate increases. Alternatively, the determining policy may be replaced with a policy with any other possible name. The determining policy may be carried in the configuration information #1, or may be separately delivered, or may be preconfigured locally on the first network element or predefined locally on the first network element in a protocol. A specific implementation is not limited.

It should be further understood that an objective of exposing the network congestion information of the service flow is to expect the application side to reduce the transmission rate of the service flow in a timely manner, for example, to an expected level. If the first network element determines, through monitoring, that the application side does not reduce the transmission rate of the service flow to the expected level, for example, the transmission rate does not decrease, a decrease amplitude of the transmission rate is less than the amplitude threshold, or even the transmission rate increases, the first network element determines that the transmission of the service flow needs to be adjusted but is not adjusted, or needs to be optimized but is not optimized. Therefore, the first network element needs to manage and/or control the transmission of the service flow, to reduce the probability of network congestion. The following describes three cases.

Case 1: The first network element is the access network device.

The access network device may perform at least one of the following operations on the QoS flow: sending an exception report to the session management network element or the user plane network element, discarding a data packet carried in the QoS flow, reducing a transmission priority of the data radio bearer DRB to which the QoS flow is mapped, mapping the QoS flow to a new DRB, or increasing a congestion degree of the QoS flow when exposing the network congestion information of the QoS flow.

The session management network element and the user plane network element may be network elements corresponding to the QoS flow, for example, a session management network element that configures (or establishes) the QoS flow, and a user plane network element that carries the QoS flow.

The exception report may indicate that transmission of the data packet carried in the QoS flow is abnormal, that is, transmission of the QoS flow is not adjusted when the transmission needs to be adjusted, or the transmission of the QoS flow needs to be adjusted but is not adjusted in the current network congestion degree. For example, the exception report includes an identifier of the QoS flow and/or information that indicates that the transmission of the data packet is abnormal. In other words, the identifier of the QoS flow may be decoupled from the information indicating that transmission of the data packet is abnormal, and the two may be combined to indicate a function of the exception report, so that an indication manner is more flexible.

It should be understood that the exception report may alternatively not include the identifier of the QoS flow. For example, the QoS flow is pre-aligned between the access network device and the session management network element/user plane network element, and the session management network element/user plane network element may determine, based on the exception report, that the transmission of the service flow is abnormal. Alternatively, the exception report may not include the information indicating that the transmission of the data packet is abnormal. For example, the exception report may alternatively be of a new report type, the new report type implicitly indicates that the transmission is abnormal.

For ease of understanding, the following separately describes at least one operation performed in Case 1.
(1) If the access network device exposes the network congestion information of the QoS flow, the access network device may send the exception report to the session management network element. The session management network element may send PCC rule indication information to the policy control network element based on the exception report.

The PCC rule indication information indicates that transmission of a service flow corresponding to a PCC rule is abnormal. For example, the PCC rule indication information may include at least one of the following: an identifier of the PCC rule, or the information that indicates that the transmission of the data packet is abnormal. The two may be combined to indicate a function of the PCC rule indication information. Certainly, the PCC rule indication information may alternatively not include the information that indicates that the transmission of the data packet is abnormal. For example, the PCC rule indication information may alternatively be of a new information type, and the new information type implicitly indicates that the transmission is abnormal. In this case, the PCC rule indication information may also indicate that the transmission of the service flow is not adjusted when the transmission needs to be adjusted, or the transmission of the service flow needs to be adjusted but is not adjusted in the current network congestion degree.

The session management network element may determine, based on the identifier of the QoS flow in the exception report, the PCC rule corresponding to the QoS flow, and encapsulate the identifier of the PCC rule and the information that indicates that the transmission of the data packet is abnormal, to obtain the PCC rule indication information, and then send the PCC rule indication information to the policy control network element. For example, the session management network element carries the PCC rule indication information to any possible signaling that is sent by the session management network element to the policy control network element. The session management network element determines, based on the identifier of the QoS flow in the exception report, the identifier of the corresponding PCC rule. The identifier of the PCC rule may alternatively be flow description information of the service flow, where the service flow is the service flow carried in the QoS flow.

The policy control network element may receive the PCC rule indication information from the session management network element, and reduce a QoS level of the PCC rule according to the PCC rule indication information, for example, reduce QoS guarantee, to implement transmission rate limiting, thereby reducing the possibility of network congestion and resolving a problem of transmission fairness between service flows. Alternatively, the policy control network element may further send the PCC rule indication information to the application function network element, for example, an application function network element that provides the service flow, to give an alarm to the application function network element that the transmission is abnormal, so that the application function network element adjusts the transmission based on the alarm that the transmission is abnormal, thereby avoiding network congestion and a problem of transmission fairness between service flows.

(2) If the user plane network element exposes the network congestion information of the QoS flow (or the service flow), the access network device may send the exception report to the user plane network element. Specifically, the access network device may send the exception report to the user plane network element through an access and mobility management network element and the session management network element, or send the exception report to the user plane network element through a GTP-U layer of an uplink data packet or an uplink null packet. The user plane network element may receive the exception report from the access network device or the access network device corresponding to the QoS flow, to determine that the transmission of the data packet carried in the QoS flow is abnormal. In this way, when the transmission of the data packet carried in the QoS flow is abnormal, the user plane network element may manage and/or control the transmission of the QoS flow. For example, in response to configuration information (denoted as configuration information #2) of the service flow, the user plane network element manages and/or controls the transmission of the QoS flow, to reduce the possibility of network congestion.

The configuration information #2 may indicate that when the network congestion information of the QoS flow (or the service flow) is exposed but the transmission of the QoS flow (or the service flow) is abnormal, the transmission of the QoS flow (or the service flow) needs to be managed and/or controlled. For example, the configuration information #2 includes at least one of the following: information that indicates the QoS flow (or the service flow), for example, the QFI, the flow description information of the service flow, or management indication information. The management indication information may be implemented by reusing an existing information element in the configuration information #2, or may be a newly defined information element. The management indication information may be a character string of one or more bits or a bitmap, and indicates that the transmission needs to be managed and/or controlled when the network congestion information is exposed but the transmission is abnormal.

It may be understood that the configuration information #2 may alternatively not include the information that indicates the QoS flow. For example, the QoS flow is pre-aligned between the user plane network element and the access network device, and the user plane network element may manage and/or control the transmission of the QoS flow by default according to the management indication information. Alternatively, the configuration information #2 may not include the management indication information. For example, the configuration information #2 may alternatively be of a new information type, and the new information type implicitly indicates to manage and/or control the transmission of the QoS flow.

Optionally, the user plane network element may obtain the configuration information #2 from the session management network element in advance. For example, in the N4 session establishment process, the user plane network element receives the N4 message from the session management network element, where the N4 message may carry the configuration information #2. Alternatively, the configuration information #2 may be preconfigured locally on the user plane network element or predefined locally on the user plane network element in a protocol.

It may be further understood that the configuration information #2 is merely an example name, and may also be replaced with any possible name, for example, control configuration information or transmission control configuration information. This is not limited.

In addition, the user plane network element may also map the QoS flow to the corresponding service flow, for example, the service flow carried by the QoS flow, and the user plane network element manages and/or controls the transmission of the service flow. In addition, for a specific implementation of managing and/or controlling the transmission of the QoS flow/service flow by the user plane network element, refer to related descriptions in the following Case 2 or Case 3. Details are not described herein again.

(3) The access network device may discard data packets carried in the QoS flow, for example, discard some data packets carried in the QoS flow based on a specific proportion (for example, 30% or 40%, which is not specifically limited). Alternatively, the access network device may directly reduce the transmission priority of the data radio bearer (data radio bearer, DRB) to which the QoS flow is mapped. In this way, the access network device can locally limit the transmission rate of the QoS flow, to reduce the transmission rate to the greatest extent, thereby avoiding network congestion and a problem of transmission fairness between a plurality of flows, or reducing the possibility of network congestion and resolving a problem of transmission fairness between a plurality of service flows.

(4) If the QoS flow shares the DRB with another QoS flow, for example, a QoS flow #1 and a QoS flow #2 share a DRB #1, the access network device may alternatively map the QoS flow to the new DRB, for example, establish the new DRB for the QoS flow, where the DRB may be exclusively used by the QoS flow. For example, the QoS flow #1 is mapped to a new DRB #2, so that both the QoS flow #1 and the QoS flow #2 can exclusively use the DRBs. To be specific, the QoS flow is decoupled from another QoS flow that shares the DRB in advance, to avoid network congestion caused because the QoS flow preempts a DRB resource of the another QoS flow, thereby reducing the possibility of network congestion, and avoiding a problem of transmission fairness between a plurality of flows.

(5) If the access network device exposes the network congestion information of the QoS flow, the access network device may continue to expose the new network congestion information of the QoS flow. A proportion value represented by the new network congestion information may be a sum of a proportion value represented by the network congestion information of the QoS flow and a preset increment proportion value. The preset increment proportion value may be dynamically set by the access network device based on an actual situation. This is not specifically limited. For example, the access network device exposes the network congestion information of the QoS flow in advance based on a proportion of 42%. If the preset increment proportion value is 10%, the access network device may increase the proportion from 42% to 52%, and continue to expose the network congestion information of the QoS flow based on the proportion of 52%. To be specific, for example, in uplink or downlink data packets, CE flags with values of "11" are filled in IP headers of 52% of the data packets, so that the application side adjusts the transmission, for example, reduces a bitrate, based on a higher congestion degree, to reduce the possibility of network congestion and avoid a problem of transmission fairness between a plurality of flows.

Case 2: The first network element is the user plane network element, and the user plane network element performs supervision by using the QoS flow as a granularity.

The user plane network element may perform at least one of the following operations on the QoS flow: sending an exception report to the session management network element, discarding a data packet carried in the QoS flow, sending an alarm notification to the application function network element, or exposing the new network congestion information of the QoS flow.

The session management network element may be a network element corresponding to the QoS flow, for example, a session management network element that configures (or establishes) the QoS flow. The exception report may indicate that transmission of the data packet carried in the QoS flow is abnormal, for example, include an identifier of the QoS flow and/or information that indicates that the transmission of the data packet is abnormal. The identifier of the QoS flow may be the QFI or flow description information of the service flow carried in the QoS flow. For a specific implementation, refer to the related description of the exception report. Details are not described herein again. The QoS flow may correspond to a service, for example, carry data of the service, and the application function network element may be a network element that provides the service. The alarm notification may indicate that transmission of a data packet of the service corresponding to the QoS flow is abnormal, for example, include an identifier of the service and/or information that indicates that the transmission of the data packet is abnormal. A specific implementation is similar to that of the foregoing exception report. Refer to the exception report for understanding. Details are not described again.

For ease of understanding, the following also separately describes at least one operation performed in Case 2.
(1) If the user plane network element exposes the network congestion information of the QoS flow, the user plane network element may send the exception report to the session management network element, so that the policy control network element can finally reduce a QoS level of a PCC rule, reduce the possibility of network congestion, and avoid a problem of transmission fairness between a plurality of flows.
(2) The user plane network element may alternatively discard the data packet carried in the QoS flow, to implement local rate limiting, reduce the possibility of network congestion, and avoid a problem of transmission fairness between a plurality of flows.
(3) The user plane network element may alternatively send the alarm notification to the application function network element, or expose the new network congestion information of the QoS flow, so that the application function network element (or the application side) adjusts the transmission based on a higher congestion degree or an alarm that the transmission is abnormal, thereby avoiding network congestion and avoiding a problem of transmission fairness between a plurality of flows. The alarm notification includes the flow description information of the service flow carried in the QoS flow. Specifically, the user plane network element may determine, based on the QoS identifier, the flow description information of the service flow carried in the QoS flow. Optionally, the alarm notification further includes alarm indication information. The alarm indication information indicates that the transmission of the service flow is not adjusted when the transmission needs to be adjusted, or indicates that the transmission of the service flow needs to be adjusted but is not adjusted in the current network congestion degree, or indicates the application server/application function network element to adjust the transmission of the corresponding service flow correspondingly.

In addition, for the three operations performed in the foregoing Case 2, refer to related descriptions of the foregoing Case 1. Details are not described herein again.

Case 3: The first network element is the user plane network element, and the user plane network element performs supervision by using the service flow as a granularity.

The user plane network element may perform at least one of the following on the service flow: sending an exception report to the session management network element, sending an alarm notification to the application function network element, discarding a data packet carried in the service flow, or exposing new network congestion information of the service flow. A proportion value represented by the new network congestion information may alternatively be a sum of a proportion value represented by the network congestion information of the service flow and a preset increment proportion value. For details, refer to the foregoing descriptions. Details are not described herein again.

The session management network element or the application function network element is a network element corresponding to the service flow, for example, a session management network element that configures (or establishes) the QoS flow, and an application function network element that provides the service flow. The alarm notification or the exception report may indicate that transmission of a data packet of a service corresponding to the service flow is abnormal, for example, include an identifier of the service and/or information that indicates that the transmission of the data packet is abnormal. A specific implementation is similar to that of the foregoing exception report or alarm notification. Refer to the exception report or the alarm notification for understanding. Details are not described again.

For ease of understanding, the following also separately describes at least one operation performed in Case 3.
(1) If the user plane network element exposes the network congestion information of the service flow, the user plane network element may send the exception report to the session management network element, so that the session management network element sends PCC rule indication information to the policy control network element, to trigger the policy control network element to reduce a QoS level of a PCC rule, for example, reduce a transmission priority, thereby reducing the possibility of network congestion and avoiding a problem of transmission fairness between a plurality of flows.
(2) The user plane network element may alternatively discard the data packet in the service flow, to implement local rate limiting, reduce the possibility of network congestion, and avoid a problem of transmission fairness between a plurality of flows.
(3) The user plane network element may alternatively send the alarm notification to the application function network element, or expose the new network congestion information of the service flow, so that the application side adjusts the transmission based on a higher congestion degree or an alarm that the transmission is abnormal, thereby avoiding network congestion and avoiding a problem of transmission fairness between a plurality of flows. The alarm notification includes the flow description information of the service flow. Optionally, the alarm notification may further include alarm indication information. The alarm indication information may indicate that the transmission of the service flow is not adjusted when the transmission needs to be adjusted, or indicate that the transmission of the service flow needs to be adjusted but is not adjusted in the current network congestion degree, or indicate the application server/application function network element to adjust the transmission of the corresponding service flow correspondingly.

For the three operations performed in the foregoing Case 3, refer to related descriptions of the foregoing Case 1. Details are not described herein again.

It may be further understood that, in any one of the foregoing three cases, how the first network element specifically performs at least one corresponding operation may also be understood as a management and control policy, or may be replaced with a policy with any other possible name. The management and control policy may be carried in the configuration information #1 (or may be carried in the configuration information #2 for the user plane network element in Case 2), or may be separately delivered, or may be preconfigured locally on the first network element or predefined locally on the first network element in a protocol. A specific implementation is not limited. For example, when the first network element is the access network device, the management and control policy indicates that it is necessary to manage and/or control the transmission of the service flow (or the QoS flow that carries the service flow). This specifically includes performing at least one of the following on the QoS flow: sending the exception report to the session management network element or the user plane network element, discarding the data packet carried in the QoS flow, reducing the transmission priority of the data radio bearer DRB to which the QoS flow is mapped, mapping the QoS flow to the new DRB, or increasing the congestion degree of the QoS flow when exposing the network congestion information of the QoS flow. Alternatively, when the first network element is the user plane network element, the management and control policy indicates that it is necessary to manage and/or control the transmission of the service flow. Managing and/or controlling the transmission of the service flow includes performing at least one of the following on the service flow: sending the exception report to the session management network element, discarding the data packet in the service flow, sending the alarm notification to the application function network element, or exposing the new network congestion information of the service flow. Alternatively, this specifically includes performing at least one of the following on the service flow: sending the exception report to the session management network element, sending the alarm notification to the application function network element, discarding the data packet in the service flow, or exposing the new network congestion information of the service flow, where the managed and/or controlled service flow may alternatively be the QoS flow that carries the service flow.

Optionally, the configuration information of the service flow may further include information indicating that the first network element that manages and/or controls the transmission is the access network device or the user plane network element. For example, the configuration information #1 carries information indicating that the first network element that supervises the transmission is the access network device, and the configuration information #2 carries information indicating that the first network element that supervises the transmission is the user plane network element. Supervising the transmission is to manage and/or control the transmission if it is determined, based on the congestion degree information, that the transmission needs to be adjusted but is not adjusted.

In conclusion, a network element on a network side, for example, the first network element, may obtain the network congestion information of the service flow, to determine a possibility that congestion occurs on a current network and perform supervision. For example, after the network congestion degree becomes higher, for example, the possibility of network congestion has reached a level that the application side needs to reduce the possibility of network congestion by adjusting the transmission of the service flow, if the first network element determines, by monitoring the transmission of the service flow, that the application side does not adjust the transmission of the service flow, the first network element can manage and/or control the transmission of the service flow, to avoid network congestion and also ensure fairness between services, thereby ensuring user experience.

Optionally, with reference to the foregoing method, before S401, the method may further include the following procedures:
S400a: The application function network element obtains requirement information of the transmission of the service flow.

The requirement information of the transmission of the service flow (denoted as requirement information) may indicate that the transmission of the service flow needs to be managed and/or controlled based on the congestion degree of the service flow and the transmission of the service flow. Specifically, the requirement information may indicate that it is necessary to determine, based on the congestion degree of the service flow, whether the transmission of the service flow needs to be adjusted, and manage and/or control the transmission of the service flow when the transmission of the service flow needs to be adjusted but is not adjusted. For example, the requirement information may include the supervision indication information, and optionally, may further include the information indicating the service flow, for example, the flow description information of the service flow. The flow description information may be specifically the information such as the foregoing IP quintuple/IP triplet/ToS/flow label. For a specific implementation, refer to related descriptions in S401. Details are not described herein again.

Optionally, the requirement information may further include the monitoring time period. For a specific implementation, refer to related descriptions in S401. Details are not described herein again.

Optionally, the requirement information may further include the foregoing policy, for example, at least one of the supervision policy, the determining policy, or the management and control policy. For a specific implementation, refer to related descriptions in S401. Details are not described herein again.

Optionally, the requirement information may further include information indicating that the first network element that supervises the transmission is the access network device or the user plane network element.

The application function network element may obtain the requirement information locally or from another network element on any possible occasion. This is not limited.

In addition, the requirement information is merely an example name, and may be replaced with any possible name, for example, management and control requirement information or transmission management and control requirement information. This is not limited.

S400b: The application function network element sends the requirement information. The policy control network element obtains policy information of the service flow.

If both the application function network element and the policy control network element are network elements in an operator network, the application function network element may directly send the requirement information to the policy control network element. Alternatively, if the application function network element is a third-party network element outside the operator network, the application function network element may send the requirement information to a network capability exposure network element, and when the network capability exposure network element verifies that the application function network element is trusted, the network capability exposure network sends the requirement information to the policy control network element.

The policy control network element may determine, based on the requirement information, the policy information of the transmission of the service flow (denoted as the policy information). For example, the policy information may further include the supervision indication information, and optionally, may further include the information indicating the service flow. Optionally, the policy information may further include the monitoring time period. Optionally, the requirement information may further include the foregoing policy, for example, at least one of the supervision policy, the determining policy, or the management and control policy. In other words, the policy control network element may obtain information in the requirement information, and encapsulate the information to obtain the policy information.

It may be understood that determining, by the policy control network element, the policy information based on the requirement information provided by the application function network element is an example, and is not used as a limitation. For example, the policy information may alternatively be preconfigured locally on the policy control network element or predefined locally on the policy control network element in a protocol.

S400c: The policy control network element sends the policy information to the session management network element corresponding to the service flow.

When the session management network element triggers establishment or modification of a session of a service, for example, when a PDU session is established or modified, the policy control network element may send the policy information to the session management network element. Alternatively, the policy control network element may determine, by itself, to send the policy information to the session management network element.

It should be understood that for a definition of the corresponding session management network element, refer to the foregoing related description, that is, a session management network element that establishes or modifies a session for transmitting the service flow. Details are not described herein again.

In addition, the policy information is merely an example name, and may be replaced with any possible name, for example, management and control policy information or transmission management and control policy information. This is not limited herein.

S400d: The session management network element sends the configuration information of the service flow to the first network element based on the policy information.

The session management network element may determine the configuration information of the service flow, for example, the configuration information #1, based on the received policy information.

For example, for the foregoing Case 1, the session management network element may indicate to map the service flow to the QoS flow corresponding to the service flow, that is, convert the information that is in the policy information and that indicates the service flow into the identifier of the QoS flow, for example, the QFI, encapsulate the QFI and other information (such as the supervision indication information and the monitoring time period) in the policy information into the configuration information #1, and then send the configuration information #1 to the access network device, for example, the configuration information #1 is carried in a QoS configuration. For another example, for the foregoing Case 2, the session management network element maps the service flow to the QoS flow corresponding to the service flow, that is, converts the flow description information of the service flow into the QFI, encapsulates the QFI and the other information in the policy information into the configuration information #1, and then sends the configuration information #1 to the user plane network element. For example, the configuration information #1 is carried in QoS enforcement rules (QoS enforcement rules, QER) or a packet detection rule (packet detection rule, PDR) in N4 rules. For another example, for the foregoing Case 3, the session management network element may directly encapsulate the information in the policy information into the configuration information #1, and then send the configuration information #1 to the user plane network element.

Optionally, for the foregoing Case 1, in this embodiment of this application, the configuration information #2 may also be configured for the user plane network element in a manner similar to that of the configuration information #1. For example, the application function network element may further carry the management indication information in the requirement information, so that the management indication information can also be subsequently obtained by the session management network element when carried in the policy information. In this way, the session management network element may convert the flow description information of the service flow into the QFI based on the policy information, encapsulate the flow description information of the service flow, the QFI, and the management indication information into the configuration information #2, and then send the configuration information #2 to the user plane network element.

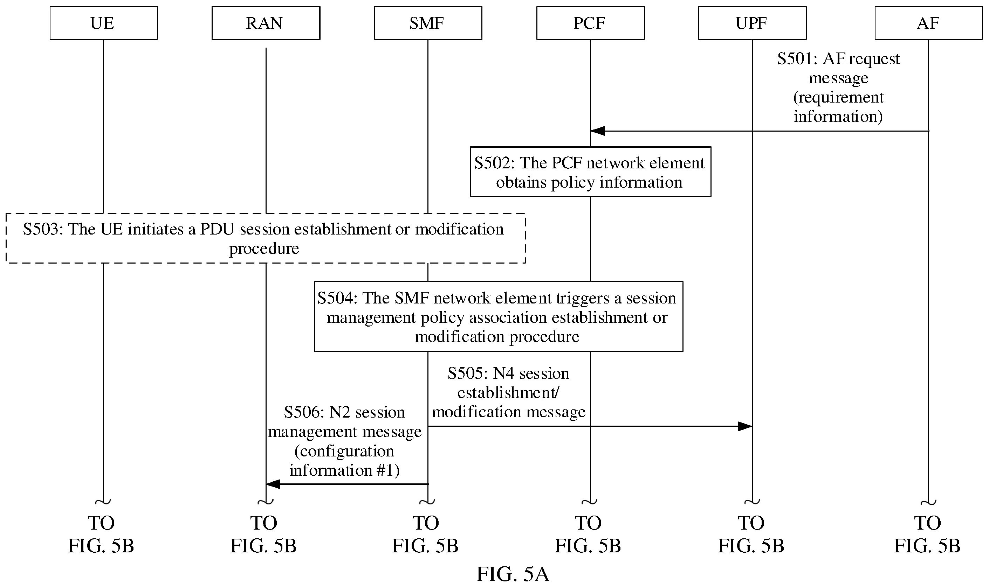

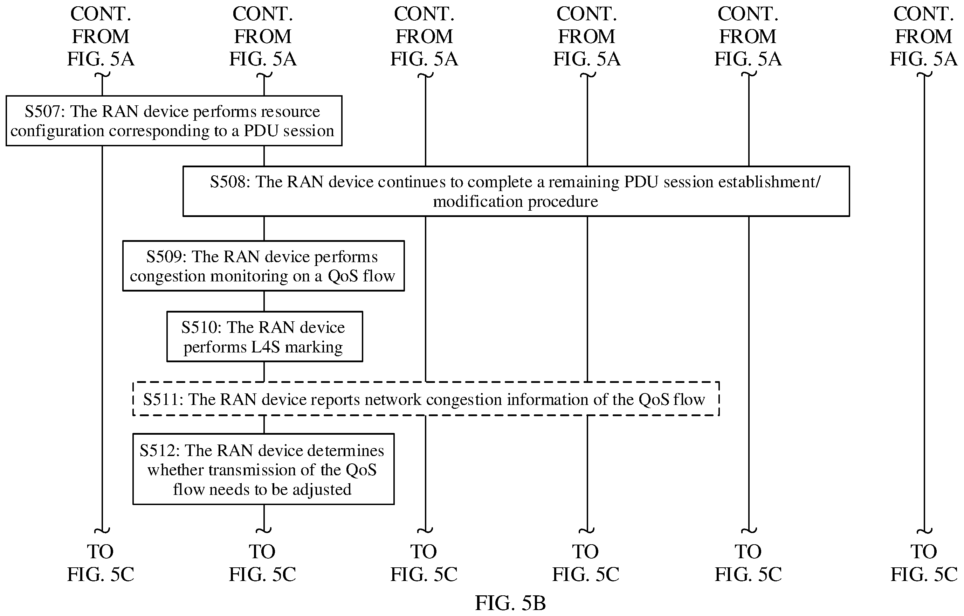

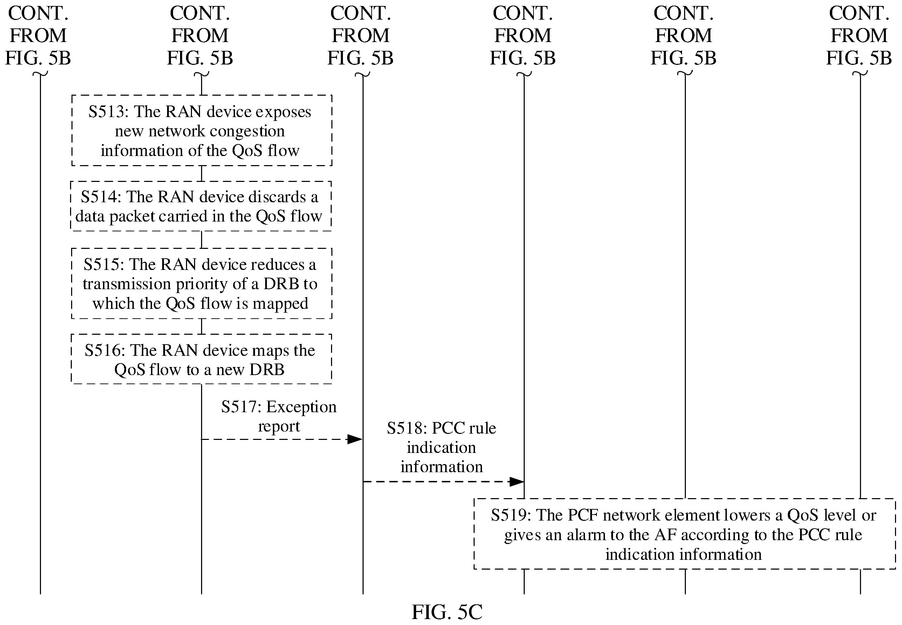

With reference to FIG. 4, the foregoing describes an overall procedure of the communication method provided in embodiments of this application. With reference to FIG. 5A, FIG. 5B, and FIG. 5C to FIG. 7A, FIG. 7B, and FIG. 7C, the foregoing specifically describes specific procedures of the communication method provided in embodiments of this application in various scenarios.

### Scenario 1:

FIG. 5A, FIG. 5B, and FIG. 5C are a schematic flowchart 2 of a communication method according to an embodiment of this application. The communication method is applicable to the foregoing communication system, and specifically relates to interaction between UE, a RAN device (that is, the first network element is the access network device), an SMF network element (that is, the session management network element), a PCF network element (that is, the policy control network element), a UPF network element (that is, the user plane network element), and an AF (that is, the application function network element). In the scenario 1, when the RAN device exposes the network congestion information, the RAN device may perform transmission supervision based on a network congestion status, to reduce a possibility of network congestion.

Specifically, as shown in FIG. 5A, FIG. 5B, and FIG. 5C, a procedure of the communication method is as follows.

S501: The AF sends an AF request message to the PCF network element. Correspondingly, the PCF network element receives the AF request message from the AF.

If the AF is in an untrusted domain, for example, the AF is a third-party AF outside the operator network, the AF request message may be an AF QoS request (Nnef_AFSessionWithQoS) message, where the AF QoS request message may carry the foregoing requirement information. The AF may send an AF QoS session message to an NEF network element. The NEF network element may authenticate the AF. If it is determined through authentication that the AF is trusted, the NEF network element may send the requirement information to the PCF network element by using a policy authorization (Npcf_PolicyAuthorization) service; and otherwise, the NEF network element rejects the AF QoS session message.

If the AF is in a trusted domain, for example, the AF is an AF in the operator network, the AF request message may be a policy authorization service message. In other words, the AF may directly send the requirement information to the PCF network element by using the policy authorization service.

It may be understood that S501 is an optional step. For example, the policy information may alternatively be preconfigured locally on the PCF network element, and S501 is not performed.

It may be understood that for a specific implementation of the requirement information, refer to related descriptions in S400a. Details are not described herein again.

S502: The PCF network element obtains the policy information.

When receiving the requirement information, the PCF network element may determine the policy information based on the requirement information and/or a local operator configuration. For example, the PCF network element may obtain the information in the requirement information, encapsulate the information to obtain the policy information, and then locally store the policy information. Alternatively, the policy information may be preconfigured locally on the PCF network element or predefined locally on the PCF network element in a protocol. In this case, S501 may not be performed.

In addition, for a specific implementation of the policy information, refer to related descriptions in S400b and S400c. Details are not described herein again.

S503: The UE initiates a PDU session establishment or modification procedure.

In the PDU session establishment or modification procedure, the UE may send a non-access stratum (non-access stratum, NAS) message to the AMF network element, and the AMF network element sends a PDU session establishment request message or a PDU session modification request message in the NAS message to the SMF network element.

S504: The SMF network element triggers a session management (session management, SM) policy association (SM policy association) establishment or modification procedure.

If the UE triggers the PDU session establishment procedure in this case, the SMF network element triggers the SM policy association establishment procedure. If the UE triggers the PDU session establishment procedure in this case, the SMF network element triggers the SM policy association modification procedure. In this process, the SMF network element may request the PCF network element to provide an establishment or modification policy related to the PDU session. Correspondingly, in response to the request of the SMF network element, the PCF network element may locally obtain the policy information, and send the policy information to the SMF network element.

Alternatively, the PCF network element may trigger the SM policy association establishment or modification procedure by itself, and send the policy information to the SMF network element by itself. In this case, S503 may not be performed.

In this way, the SMF network element may determine the configuration information based on the policy information. For example, the SMF network element may obtain the information in the policy information, map the information indicating the service flow to the information indicating the QoS flow, for example, the QFI, and then encapsulate the information to obtain the configuration information #1.

In addition, for a specific implementation of the configuration information # 1, refer to the related descriptions in S401. Details are not described herein again.

S505: The SMF network element sends an N4 session establishment/modification (N4 Session Establishment/Modification) message to the UPF network element. Correspondingly, the UPF network element receives the N4 session establishment/modification message from the SMF network element.

The N4 session establishment/modification message is used to establish or modify an N4 session between the SMF network element and the UPF network element, or configure the N4 session. For details, refer to related descriptions in the 3GPP protocol. Details are not described herein again.

S506: The SMF network element sends an N2 session management message (N2 SM message) to the RAN device. Correspondingly, the RAN device receives the N2 session management message from the SMF network element.

Specifically, the SMF network element sends information related to N2 session management to the RAN device by using the AMF network element.

The SMF may determine, based on a local policy, that the RAN device monitors and controls the network congestion information exposed to the outside, or the SMF may determine, based on the policy information, that the RAN device monitors and controls the congestion information exposed to the outside. In this way, the QoS configuration carried in the N2 session management message may further include the configuration information #1. In addition, the N2 session management message may further include other information. For example, when S503 is performed, the N2 session management message may further include a PDU session establishment accept message or a PDU session modification accept message. For a specific implementation, refer to related descriptions in the 3GPP protocol. Details are not described herein again.

S507: The RAN device performs resource configuration corresponding to the PDU session.

Specifically, the RAN device may configure or reconfigure the DRB corresponding to the QoS flow established or modified in the PDU session.

The RAN device may send the received PDU session establishment accept message or PDU session modification accept message to the UE. In addition, the RAN device may further configure, based on the QoS configuration, a corresponding air interface resource, for example, the DRB corresponding to the QoS flow.

S508: The RAN device continues to complete a remaining PDU session establishment/modification procedure.

For a specific implementation of S508, refer to related descriptions in the 3GPP protocol. Details are not described herein again.

S509: The RAN device performs congestion monitoring on the QoS flow.

The RAN device may determine the network congestion information of the QoS flow by performing congestion monitoring on the QoS flow.

Optionally, the QoS flow may also be replaced with the DRB to which the QoS flow is mapped. In other words, the RAN device may also perform network congestion monitoring on the DRB.

S510: The RAN device performs L4S marking.

Optionally, the RAN device performs L4S marking to expose the network congestion information to the outside. For a specific implementation, refer to related descriptions in "3. R18 network information exposure". Details are not described herein again.

S511: The RAN device reports the network congestion information of the QoS flow.

Optionally, the RAN device exposes the network congestion information to the outside in a form of a control plane API. The RAN device may further report the network congestion information of the QoS flow to the PCF network element by using the SMF network element, and the PCF network element exposes the network congestion information to the AF. For example, the PCF network element directly exposes the network congestion information to the AF or exposes the network congestion information to the AF side by using the NEF network element.

It may be understood that S511 is an optional step. For example, the RAN device may alternatively select not to report the network congestion information of the QoS flow by using the control plane API, and a third-party application may determine the network congestion information by itself based on a proportion of L4S-marked data packets.

S512: The RAN device determines whether the transmission of the QoS flow needs to be adjusted.

By performing congestion monitoring on the QoS flow, the RAN device may obtain the network congestion information of the QoS flow, and determine whether the transmission of the QoS flow needs to be adjusted. If the transmission of the QoS flow needs to be adjusted and is actually adjusted, the RAN device does not perform a subsequent procedure. If the transmission of the QoS flow needs to be adjusted but is not actually adjusted, the RAN device continues to perform the subsequent procedure, for example, S513 to S517.

In addition, for a specific implementation of S512, refer to related descriptions in S401 and S402. Details are not described herein again.

S513: The RAN device exposes the new network congestion information of the QoS flow.

S514: The RAN device discards the data packet carried in the QoS flow.

S515: The RAN device reduces the transmission priority of the DRB to which the QoS flow is mapped.

S516: The RAN device maps the QoS flow to the new DRB.

S517: The RAN device sends the exception report to the SMF network element. Correspondingly, the SMF network element receives the exception report from the RAN device.

S513 to S517 are optional. The RAN device may select to perform one or more steps. This is not specifically limited. In addition, for specific implementations of S513 to S517, refer to related descriptions of Case 1 in S402. Details are not described herein again.

S518: The SMF network element sends the PCC rule indication information to the PCF network element.

Specifically, the PCC rule indication information indicates that the transmission of the service flow is not adjusted when needing to be adjusted, or indicates that QoS degradation processing needs to be performed on the service flow. Optionally, the SMF network element may further send an ID of the PCC rule to the PCF network element. The PCC rule ID may alternatively be the flow description information of the service flow in the PCC rule. The SMF network element may determine, based on the QoS flow identifier in the exception report reported by the RAN, the flow description information of the service flow corresponding to the QoS flow identifier.

S519: The PCF network element lowers a QoS level or gives an alarm to the AF according to the PCC rule indication information.

The SMF network element may send indication information to the PCF network element based on the received exception report, so that the PCF network element lowers the QoS level or gives an alarm to the AF. For a specific implementation, refer to related descriptions of Case 1 in S402. Details are not described herein again.

### Scenario 2:

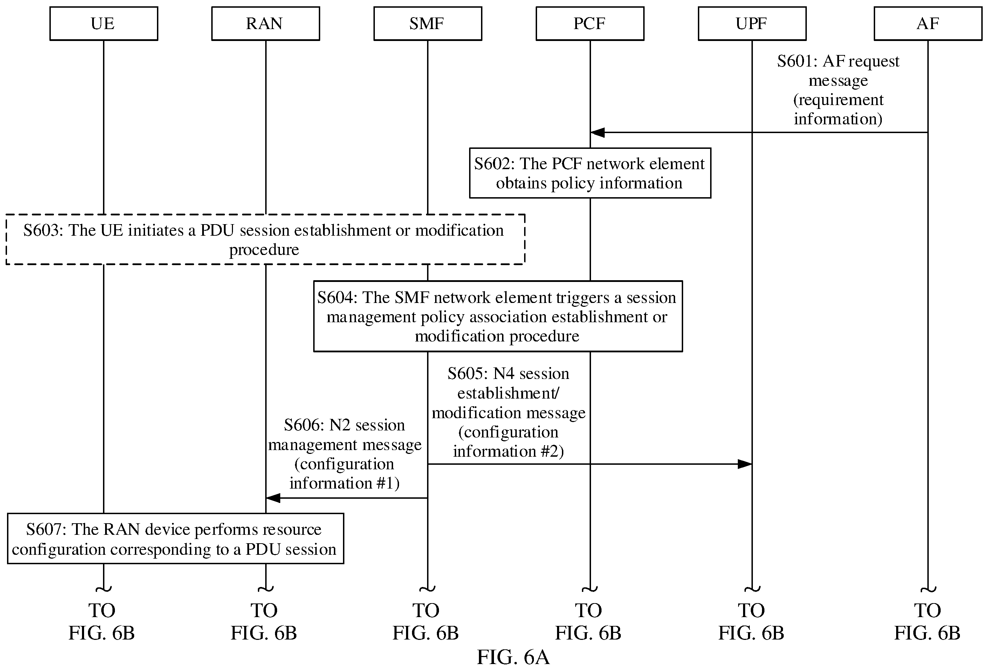

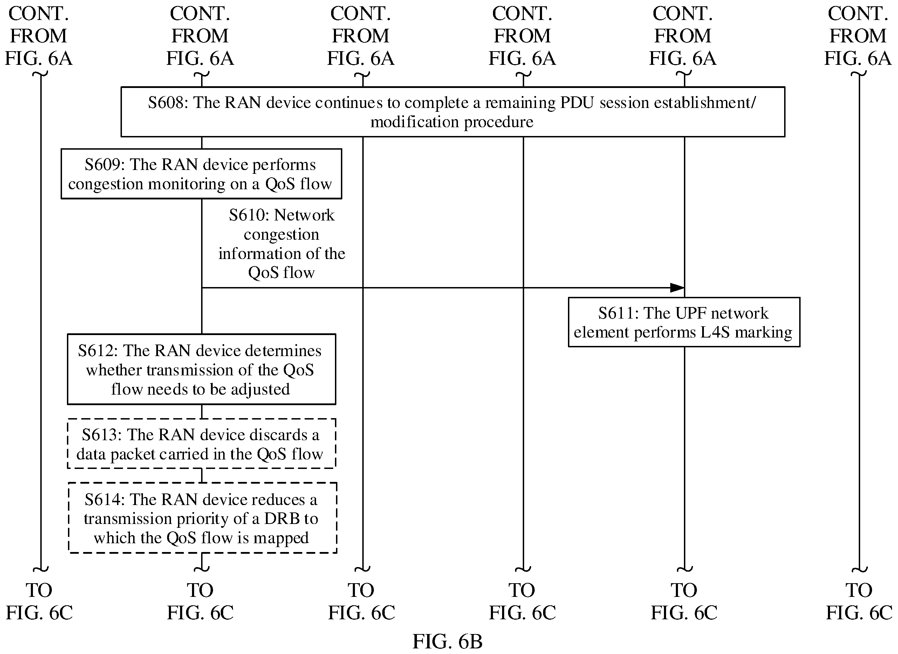

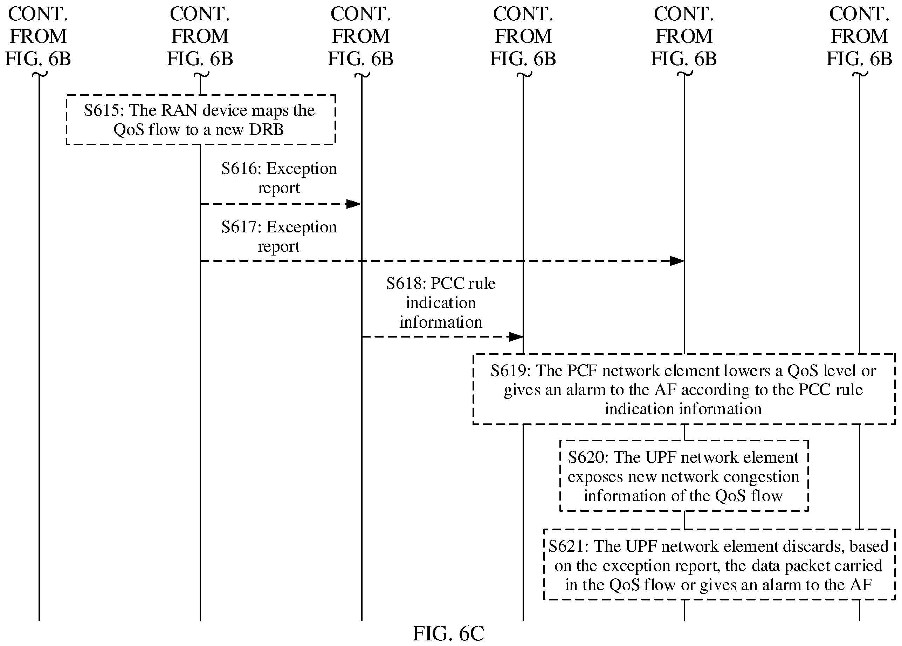

FIG. 6A, FIG. 6B, and FIG. 6C are a schematic flowchart 3 of a communication method according to an embodiment of this application. The communication method is applicable to the foregoing communication system, and specifically relates to interaction between UE, a RAN device (that is, the access network device), an SMF network element (that is, the session management network element), a PCF network element (that is, the policy control network element), a UPF network element (that is, the first network element is the user plane network element), and an AF (that is, the application function network element). In the scenario 2, when the UPF network element exposes the network congestion information, the RAN device may still perform transmission supervision based on a network congestion status, to reduce a possibility of network congestion.

Specifically, as shown in FIG. 6A, FIG. 6B, and FIG. 6C, a procedure of the communication method is as follows.

S601: The AF sends an AF request message to the PCF network element. Correspondingly, the PCF network element receives the AF request message from the AF.

S602: The PCF network element obtains the policy information.

S603: The UE initiates a PDU session establishment or modification procedure.

S604: The SMF network element triggers a session management SM policy association establishment or modification procedure.

For specific implementations of S601 to S604, refer to related descriptions of S501 to S504. Details are not described herein again.

S605: The SMF network element sends an N4 session establishment/modification message to the UPF network element. Correspondingly, the UPF network element receives the N4 session establishment/modification message from the SMF network element.

The N4 session establishment/modification message is used to establish or modify an N4 session between the SMF network element and the UPF network element. For example, the N4 session establishment/modification message includes the configuration information #2. For a specific implementation, refer to related descriptions in Case 1 in S402. Details are not described herein again. Certainly, the N4 session establishment/modification message may further include existing information. For details, refer to related descriptions in the 3GPP protocol. Details are not described herein again.

S606: The SMF network element sends an N2 session management message to the RAN device. Correspondingly, the RAN device receives the N2 session management message from the SMF network element. Specifically, the SMF network element may send information related to N2 session management to the RAN device by using the AMF.

S607: The RAN device performs resource configuration corresponding to the PDU session.

Specifically, the RAN device may configure or reconfigure the DRB corresponding to the QoS flow established or modified in the PDU session.

S608: The RAN device continues to complete a remaining PDU session establishment/modification procedure.

S609: The RAN device performs congestion monitoring on the QoS flow.

For specific implementations of S606 to S609, refer to related descriptions of S506 to S509. Details are not described herein again.

S610: The RAN device sends the network congestion information of the QoS flow to the UPF network element.

Specifically, the RAN device may send the network congestion information to the UPF network element by using a GTP-U layer of an uplink data packet, or send the network congestion information to the UPF network element by using a GTP-U layer of an uplink null data packet.

S611: The UPF network element performs L4S marking.

For specific implementations of S610 and S611, refer to related descriptions in "3. R18 network information exposure". Details are not described herein again.

S612: The RAN device determines whether the transmission of the QoS flow needs to be adjusted.

By performing congestion monitoring on the QoS flow, the RAN device may obtain the network congestion information of the QoS flow, and determine whether the transmission of the QoS flow needs to be adjusted. If the transmission of the QoS flow needs to be adjusted and is actually adjusted, the RAN device does not perform a subsequent procedure. If the transmission of the QoS flow needs to be adjusted but is not actually adjusted, the RAN device continues to perform the subsequent procedure, for example, S613 to S617.

In addition, for a specific implementation of S612, refer to related descriptions in S401 and S402. Details are not described herein again.

S613: The RAN device discards the data packet carried in the QoS flow.

S614: The RAN device reduces the transmission priority of the DRB to which the QoS flow is mapped.

S615: The RAN device maps the QoS flow to the new DRB.

S616: The RAN device sends the exception report to the SMF network element. Correspondingly, the SMF network element receives the exception report from the RAN device.

S617: The RAN device sends the exception report to the UPF network element. Correspondingly, the UPF network element receives the exception report from the RAN device. Specifically, the RAN device may send the exception report to the UPF network element by using a GTP-U layer of an uplink data packet, or send the exception report to the UPF network element by using a GTP-U layer of an uplink null data packet.

S613 to S617 are optional. The RAN device may select to perform one or more steps. This is not specifically limited. In addition, for specific implementations of S613 to S617, refer to related descriptions of Case 1 in S402. Details are not described herein again.

S618: The SMF network element sends the PCC rule indication information to the PCF network element.

Specifically, the PCC rule indication information indicates that the transmission of the service flow is not adjusted when needing to be adjusted, or indicates that QoS degradation processing needs to be performed on the service flow. Optionally, the SMF network element may further send an ID of the PCC rule to the PCF network element. The PCC rule ID may alternatively be the flow description information of the service flow in the PCC rule. The SMF network element determines, based on the QoS flow identifier in the exception report reported by the RAN, the flow description information of the service flow corresponding to the QoS flow identifier.

S619: The PCF network element lowers a QoS level or gives an alarm to the AF according to the PCC rule indication information.

When the SMF network element receives the exception report, S618 and S619 are performed. For a specific implementation, refer to related descriptions of Case 1 in S402. Details are not described herein again.

S620: The UPF network element exposes the new network congestion information of the QoS flow.

S621: The UPF network element discards, based on the exception report, the data packet carried in the QoS flow or gives an alarm to the AF.

When receiving the exception report, the UPF network element performs S620 and S621. For a specific implementation, refer to related descriptions of Case 1 in S402. Details are not described herein again.

In addition, for the UPF network element in the scenario 2, the QoS flow may also be replaced with the service flow corresponding to the QoS flow.

### Scenario 3:

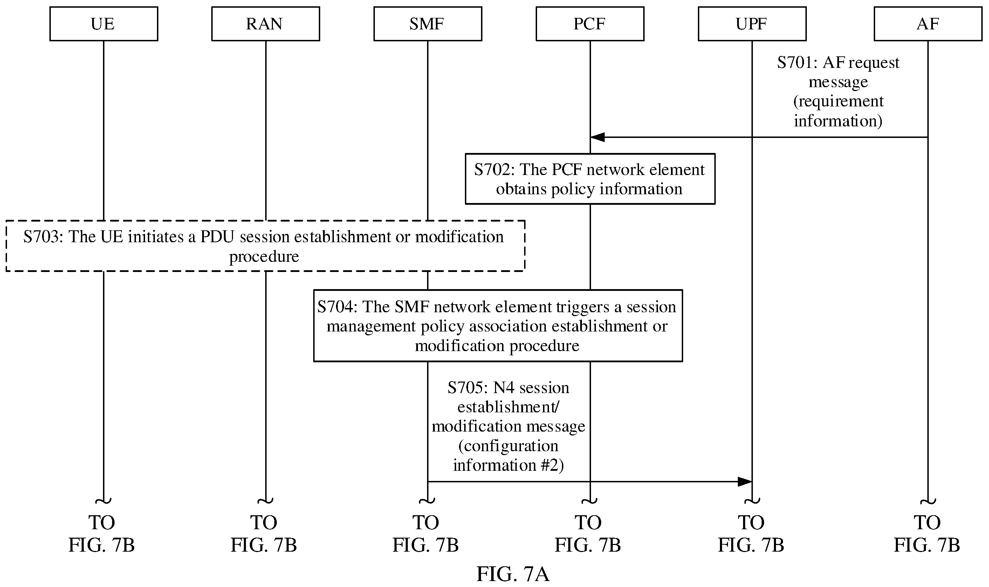

FIG. 7A, FIG. 7B, and FIG. 7C are a schematic flowchart 4 of a communication method according to an embodiment of this application. The communication method is applicable to the foregoing communication system, and specifically relates to interaction between UE, a RAN device (that is, the access network device), an SMF network element (that is, the session management network element), a PCF network element (that is, the policy control network element), a UPF network element (that is, the first network element is the user plane network element), and an AF (that is, the application function network element). In the scenario 3, when the UPF network element exposes the network congestion information, the UPF network element may perform transmission supervision based on a network congestion status, to reduce a possibility of network congestion.

Specifically, as shown in FIG. 7A, FIG. 7B, and FIG. 7C, a procedure of the communication method is as follows.

S701: The AF sends an AF request message to the PCF network element. Correspondingly, the PCF network element receives the AF request message from the AF.

S702: The PCF network element obtains the policy information.

S703: The UE initiates a PDU session establishment or modification procedure.

S704: The SMF network element triggers a session management SM policy association establishment or modification procedure.

For specific implementations of S701 to S704, refer to related descriptions of S501 to S504. Details are not described herein again.

S705: The SMF network element sends an N4 session establishment/modification message to the UPF network element. Correspondingly, the UPF network element receives the N4 session establishment/modification message from the SMF network element.

The N4 session establishment/modification message is used to establish or modify an N4 session between the SMF network element and the UPF network element. For example, the N4 session establishment/modification message includes the configuration information #1. For a specific implementation, refer to related descriptions in Case 2 in S402. Details are not described herein again. Certainly, the N4 session establishment/modification message may further include existing information. For details, refer to related descriptions in the 3GPP protocol. Details are not described herein again.

S706: The SMF network element sends an N2 session management message to the RAN device. Correspondingly, the RAN device receives the N2 session management message from the SMF network element. Specifically, the SMF network element may send information related to N2 session management to the RAN device by using the AMF network element.

The N2 session management message may include existing information. For details, refer to related descriptions in the 3GPP protocol. Details are not described herein again.

S707: The RAN device performs resource configuration corresponding to the PDU session.

Specifically, the RAN device may configure or reconfigure the DRB corresponding to the QoS flow established or modified in the PDU session.

S708: The RAN device continues to complete a remaining PDU session establishment/modification procedure.

S709: The RAN device performs congestion monitoring on the QoS flow.

For specific implementations of S706 to S709, refer to related descriptions of S506 to S509. Details are not described herein again.

S710: The RAN device sends the network congestion information of the QoS flow to the UPF network element.

Specifically, the RAN device may send the network congestion information to the UPF network element by using a GTP-U layer of an uplink data packet, or send the network congestion information to the UPF network element by using a GTP-U layer of an uplink null data packet.

S711: The UPF network element performs L4S marking.

For specific implementations of S710 and S711, refer to related descriptions in "3. R18 network information exposure". Details are not described herein again.

S712: The UPF network element determines whether the transmission of the QoS flow needs to be adjusted.

The UPF network element may determine, based on the network congestion information that is of the QoS flow and that is reported by the RAN device, whether transmission of the QoS flow needs to be adjusted. If the transmission of the QoS flow needs to be adjusted and is actually adjusted, the UPF network element does not perform a subsequent procedure. If the transmission of the QoS flow needs to be adjusted but is not actually adjusted, the UPF network element continues to perform the subsequent procedure, for example, S713 to S716.

In addition, for a specific implementation of S712, refer to related descriptions in S401 and S402. Details are not described herein again.

S713: The UPF network element exposes the new network congestion information of the QoS flow.

S714: The UPF network element discards the data packet carried in the QoS flow.

S715: The UPF network element sends the exception report to the SMF network element. Correspondingly, the SMF network element receives the exception report from the UPF network element.

S716: The UPF network element sends the alarm notification to the AF. Correspondingly, the AF receives the alarm notification from the UPF network element.

S713 to S716 are optional, and the UPF network element may select to perform one or more steps. This is not specifically limited. In addition, for specific implementations of S713 to S716, refer to related descriptions of Case 2 in S402. Details are not described herein again.

S717: The SMF network element sends the PCC rule indication information to the PCF network element.

Specifically, the PCC rule indication information indicates that the transmission of the service flow is not adjusted when needing to be adjusted, or indicates that QoS degradation processing needs to be performed on the service flow. Optionally, the SMF network element may further send an ID of the PCC rule to the PCF network element. The PCC rule ID may alternatively be the flow description information of the service flow in the PCC rule. The SMF network element may determine, based on the QoS flow identifier in the exception report reported by the RAN, the flow description information of the service flow corresponding to the QoS flow identifier.

S718: The PCF network element lowers a QoS level or gives an alarm to the AF according to the PCC rule indication information.

The SMF network element may send indication information to the PCF network element based on the received exception report, so that the PCF network element lowers the QoS level or gives an alarm to the AF. For a specific implementation, refer to related descriptions of Case 1 in S402. Details are not described herein again.

It may be understood that, in the scenario 3, the QoS flow may also be replaced with the service flow corresponding to the QoS flow, that is, configuration and transmission supervision are performed by using the service flow as a granularity. For a specific implementation, refer to related descriptions of Case 3 in S402. Details are not described herein again.

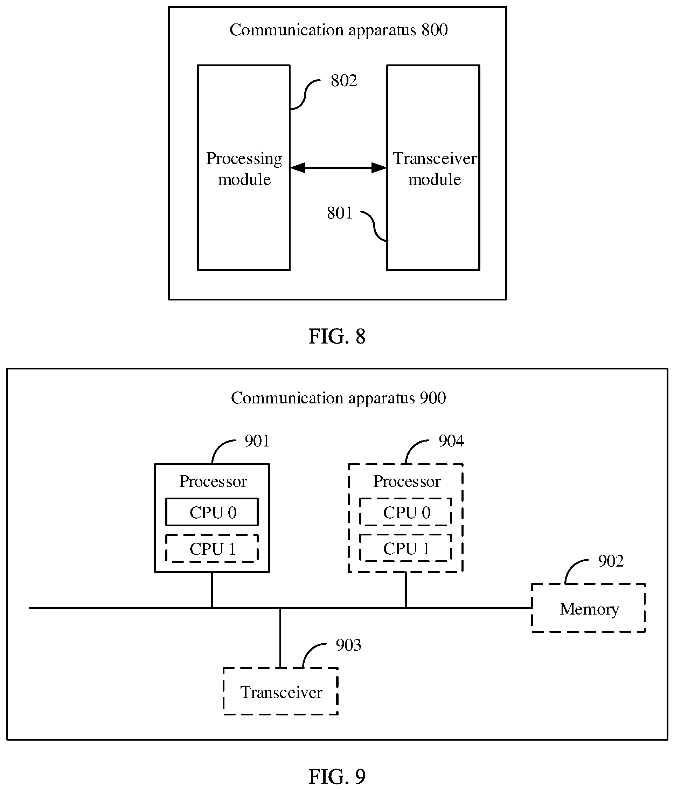

With reference to FIG. 4 to FIG. 7A, FIG. 7B, and FIG. 7C, the foregoing describes in detail the communication method provided in embodiments of this application. With reference to FIG. 8 and FIG. 9, the following describes in detail communication apparatuses configured to perform the communication method provided in embodiments of this application.

FIG. 8 is a diagram 1 of a structure of a communication apparatus according to an embodiment of this application. For example, as shown in FIG. 8, the communication apparatus 800 includes a transceiver module 801 and a processing module 802. For ease of description, FIG. 8 shows only main components of the communication apparatus.

The transceiver module 801 is configured to perform receiving and sending functions in the method shown in FIG. 4 to FIG. 7A, FIG. 7B, and FIG. 7C, and the processing module 802 is configured to perform a function other than the receiving and sending functions in the method shown in FIG. 4 to FIG. 7A, FIG. 7B, and FIG. 7C.

Optionally, the transceiver module 801 may include a sending module (not shown in FIG. 8) and a receiving module (not shown in FIG. 8). The sending module is configured to implement a sending function of the communication apparatus 800, and the receiving module is configured to implement a receiving function of the communication apparatus 800.

Optionally, the communication apparatus 800 may further include a storage module (not shown in FIG. 8). The storage module stores a program or instructions. When the processing module 802 executes the program or the instructions, the communication apparatus 800 is enabled to perform functions of respective devices/network elements in the method shown in FIG. 4 to FIG. 7A, FIG. 7B, and FIG. 7C in the foregoing method.

It may be understood that the communication apparatus 800 may be a network device, or may be a chip (system) or another part or component that may be disposed in a network device, or may be an apparatus including a network device. This is not limited in this application.

In addition, for technical effects of the communication apparatus 800, refer to the technical effects of the communication method shown in FIG. 4 to FIG. 7A, FIG. 7B, and FIG. 7C. Details are not described herein again.

FIG. 9 is a diagram 2 of a structure of a communication apparatus according to an embodiment of this application. For example, the communication apparatus may be a terminal, or may be a chip (system) or another part or component that may be disposed in a terminal. As shown in FIG. 9, the communication apparatus 900 may include a processor 901. Optionally, the communication apparatus 900 may further include a memory 902 and/or a transceiver 903. The processor 901 is coupled to the memory 902 and the transceiver 903, for example, may be connected to the memory 902 and the transceiver 903 through a communication bus.

The following describes the components of the communication apparatus 900 in detail with reference to FIG. 9.

The processor 901 is a control center of the communication apparatus 900, and may be one processor, or may be a collective term for a plurality of processing elements. For example, the processor 901 is one or more central processing units (central processing unit, CPU), may be an application-specific integrated circuit (application-specific integrated circuit, ASIC), or may be one or more integrated circuits configured to implement embodiments of this application, for example, one or more microprocessors (digital signal processor, DSP), or one or more field programmable gate arrays (field programmable gate array, FPGA).

Optionally, the processor 901 may perform various functions of the communication apparatus 900 by running or executing a software program stored in the memory 902 and invoking data stored in the memory 902, for example, perform the communication method shown in FIG. 4 to FIG. 7A, FIG. 7B, and FIG. 7C.

During specific implementation, in an embodiment, the processor 901 may include one or more CPUs, for example, a CPU 0 and a CPU 1 shown in FIG. 9.

During specific implementation, in an embodiment, the communication apparatus 900 may alternatively include a plurality of processors, for example, the processor 901 and a processor 904 shown in FIG. 9. Each of the processors may be a single-core processor (single-CPU), or may be a multi-core processor (multi-CPU). The processor herein may be one or more devices, circuits, and/or processing cores configured to process data (for example, computer program instructions).

The memory 902 is configured to store the software program for performing the solutions of this application, and the processor 901 controls execution of the software program. For a specific implementation, refer to the foregoing method embodiments. Details are not described herein again.

Optionally, the memory 902 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can carry or store expected program code in a form of instructions or data structures and that is accessible to a computer, but is not limited thereto. The memory 902 may be integrated with the processor 901, or may exist independently, and is coupled to the processor 901 through an interface circuit (not shown in FIG. 9) of the communication apparatus 900. This is not specifically limited in this embodiment of this application.

The transceiver 903 is configured to communicate with another communication apparatus. For example, the communication apparatus 900 is a terminal, and the transceiver 903 may be configured to communicate with a network device or communicate with another terminal device. For another example, the communication apparatus 900 is a network device, and the transceiver 903 may be configured to communicate with a terminal or communicate with another network device.

Optionally, the transceiver 903 may include a receiver and a transmitter (not separately shown in FIG. 9). The receiver is configured to implement a receiving function, and the transmitter is configured to implement a sending function.

Optionally, the transceiver 903 may be integrated with the processor 901, or may exist independently, and is coupled to the processor 901 through an interface circuit (not shown in FIG. 9) of the communication apparatus 900. This is not specifically limited in this embodiment of this application.

It may be understood that a structure of the communication apparatus 900 shown in FIG. 9 does not constitute a limitation on the communication apparatus. An actual communication apparatus may include more or fewer components than those shown in the figure, or combine some components, or have different component arrangements.

In addition, for technical effects of the communication apparatus 900, refer to the technical effects of the method in the method embodiments. Details are not described herein again.

It should be understood that, the processor in this embodiment of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When software is used to implement the embodiments, all or some of the foregoing embodiments may be implemented in a form of a computer program product. The computer program product includes one or more computer instructions or computer programs. When the computer instructions or the computer programs are loaded or executed on a computer, the procedures or functions according to embodiments of this application are entirely or partially generated. The computer may be a general-purpose computer, a dedicated computer, a computer network, or another programmable apparatus. The computer instructions may be stored in a computer-readable storage medium, or transmitted from one computer-readable storage medium to another computer-readable storage medium. For example, the computer instructions may be transmitted from a website, computer, server, or data center to another website, computer, server, or data center in a wired (for example, infrared, wireless, or microwaves) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium, or the like. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including a singular item (piece) or any combination of plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

**In** the several embodiments provided in this application, it should be understood that the disclosed system, apparatus, and method may be implemented in other manners. For example, the apparatus embodiments described above are merely examples. For example, the division of the units is only a logical function division and may be other divisions during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computing device (which may be a personal computer, a server, a network device, or the like) to perform all or some of the steps of the methods described in embodiments of this application. The foregoing storage medium includes various media that may store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first network element and comprising:
obtaining, by the first network element, network congestion information of a service flow;
determining, by the first network element based on the network congestion information of the service flow, that transmission of the service flow needs to be adjusted but is not adjusted; and
managing and/or controlling, by the first network element, the transmission of the service flow based on determining that the transmission of the service flow needs to be adjusted but is not adjusted.

2. The method according to claim 1, wherein the method further comprises:
obtaining configuration information of the service flow, wherein the configuration information indicates the first network element to determine, based on a congestion degree of the service flow, whether the transmission of the service flow needs to be adjusted, and manage and/or control the transmission of the service flow when the transmission of the service flow needs to be adjusted but is not adjusted.

3. The method according to claim 2, wherein the configuration information of the service flow comprises supervision indication information, and the supervision indication information indicates that it is necessary to determine, based on the congestion degree, whether the transmission needs to be adjusted, and manage and/or control the transmission when the transmission needs to be adjusted but is not adjusted.

4. The method according to claim 2 or 3, wherein the configuration information further indicates a monitoring time period, wherein the monitoring time period is a time period used to monitor whether the transmission of the service flow is adjusted.

5. The method according to any one of claims 1 to 4, wherein determining, by the first network element, that the transmission of the service flow is not adjusted comprises:
determining, by the first network element, that the transmission of the service flow is at least one of the following: a transmission rate does not decrease, a decrease amplitude of the transmission rate is less than an amplitude threshold, or the transmission rate increases.

6. The method according to claim 5, wherein determining, by the first network element based on the network congestion information of the service flow, that the transmission of the service flow needs to be adjusted comprises:
determining, by the first network element based on the network congestion information of the service flow, that the congestion degree of the service flow is greater than or equal to a congestion degree threshold; or
determining, by the first network element based on the network congestion information of the service flow, that an increment of the congestion degree of the service flow is greater than or equal to an increment threshold.

7. The method according to any one of claims 1 to 6, wherein the first network element is an access network device, the service flow is carried by a QoS flow, the network congestion information of the service flow is network congestion information of the QoS flow, and managing and/or controlling, by the first network element, the transmission of the service flow comprises:
performing, by the access network device, at least one of the following on the QoS flow: sending an exception report to a session management network element or a user plane network element, discarding a data packet carried in the QoS flow, reducing a transmission priority of a data radio bearer DRB to which the QoS flow is mapped, mapping the QoS flow to a new DRB, or exposing new network congestion information of the QoS flow, wherein
the session management network element and the user plane network element are network elements corresponding to the QoS flow, the exception report indicates that transmission of the data packet carried in the QoS flow is abnormal, and a proportion value represented by the new network congestion information is a sum of a proportion value represented by the network congestion information of the QoS flow and a preset increment proportion value.

8. The method according to claim 7, wherein the exception report comprises an identifier of the QoS flow and/or information that indicates that the transmission of the data packet is abnormal.

9. The method according to any one of claims 1 to 6, wherein the first network element is a user plane network element, the service flow is carried by a QoS flow, the network congestion information of the service flow is network congestion information of the QoS flow, and managing and/or controlling, by the first network element, the transmission of the service flow comprises:
performing, by the user plane network element, at least one of the following on the QoS flow: sending an exception report to a session management network element, sending an alarm notification to an application function network element, discarding a data packet carried in the QoS flow, or exposing new network congestion information of the QoS flow, wherein
the session management network element is a network element corresponding to the QoS flow, the exception report indicates that transmission of the data packet carried in the QoS flow is abnormal, the application function network element is a network element corresponding to the service flow, the alarm notification indicates that transmission of a data packet of a service corresponding to the service flow is abnormal, and a proportion value represented by the new network congestion information is a sum of a proportion value represented by the network congestion information of the QoS flow and a preset increment proportion value.

10. The method according to claim 9, wherein the exception report comprises an identifier of the QoS flow and/or information that indicates that the transmission of the data packet is abnormal, and the alarm notification comprises an identifier of the service and/or information that indicates that the transmission of the data packet is abnormal.

11. The method according to any one of claims 1 to 6, wherein the first network element is a user plane network element, and managing and/or controlling, by the first network element, the transmission of the service flow comprises:
performing, by the user plane network element, at least one of the following on the service flow: sending an exception report to a session management network element, sending an alarm notification to an application function network element, discarding a data packet in the service flow, or exposing new network congestion information of the service flow, wherein
the session management network element or the application function network element is a network element corresponding to the service flow, the exception report or the alarm notification indicates that transmission of a data packet of a service corresponding to the service flow is abnormal, and a proportion value represented by the new network congestion information is a sum of a proportion value represented by the network congestion information of the service flow and a preset increment proportion value.

12. The method according to claim 11, wherein the exception report or the alarm notification comprises an identifier of the service flow and/or information that indicates that the transmission of the data packet is abnormal.

13. A communication method, applied to an application function network element and comprising:
obtaining, by the application function network element, requirement information of transmission of a service flow, wherein the requirement information indicates that it is necessary to determine, based on a congestion degree of the service flow, whether the transmission of the service flow needs to be adjusted, and manage and/or control the transmission of the service flow when the transmission of the service flow needs to be adjusted but is not adjusted; and
sending, by the application function network element, the requirement information.

14. The method according to claim 13, wherein the requirement information of the transmission of the service flow comprises supervision indication information, and the supervision indication information indicates that it is necessary to determine, based on the congestion degree, whether the transmission needs to be adjusted, and manage and/or control the transmission when the transmission needs to be adjusted but is not adjusted.

15. The method according to claim 13 or 14, wherein the requirement information specifically indicates that it is necessary to determine, based on the congestion degree of the service flow, whether the transmission of the service flow needs to be adjusted, and manage and/or control the transmission of the service flow when the transmission of the service flow needs to be adjusted but is not adjusted in a monitoring time period.

16. The method according to claim 15, wherein the requirement information comprises the monitoring time period.

17. The method according to any one of claims 13 to 16, wherein sending, by the application function network element, the requirement information comprises:
sending, by the application function network element, an application function network element request message to a policy control network element corresponding to the service flow, wherein the application function network element request message comprises the requirement information.

18. A communication method, applied to a policy control network element and comprising:
obtaining, by the policy control network element, policy information of transmission of a service flow, wherein the policy information of the transmission of the service flow indicates that it is necessary to determine, based on a congestion degree of the service flow, whether the transmission of the service flow needs to be adjusted, and manage and/or control the transmission of the service flow when the transmission of the service flow needs to be adjusted but is not adjusted; and
sending, by the policy control network element, the policy information to a session management network element corresponding to the service flow.

19. The method according to claim 18, wherein the policy information of the transmission of the service flow comprises supervision indication information, and the supervision indication information indicates that it is necessary to determine, based on the congestion degree, whether the transmission needs to be adjusted, and manage and/or control the transmission when the transmission needs to be adjusted but is not adjusted.

20. The method according to claim 18 or 19, wherein the policy information specifically indicates that it is necessary to determine, based on the congestion degree of the service flow, whether the transmission of the service flow needs to be adjusted, and manage and/or control the transmission of the service flow when the transmission of the service flow needs to be adjusted but is not adjusted in a monitoring time period.

21. The method according to claim 20, wherein the policy information comprises the monitoring time period.

22. The method according to any one of claims 18 to 21, wherein obtaining, by the policy control network element, the policy information comprises:
receiving, by the policy control network element from an application function network element of the service flow, requirement information of the transmission of the service flow, wherein the requirement information of the transmission of the service flow indicates that it is necessary to determine, based on the congestion degree of the service flow, whether the transmission of the service flow needs to be adjusted, and manage and/or control the transmission of the service flow when the transmission of the service flow needs to be adjusted but is not adjusted; and
determining, by the policy control network element, the policy information based on the requirement information.

23. The method according to any one of claims 18 to 22, wherein after sending, by the policy control network element, the policy information to the session management network element corresponding to the service flow, the method further comprises:
receiving, by the policy control network element, indication information from the session management network element, wherein the indication information indicates that the transmission of the service flow corresponding to a policy and charging control PCC rule is abnormal; and
reducing, by the policy control network element, a quality of service QoS level of the PCC rule according to the indication information.

24. A communication method, applied to a user plane network element and comprising:
when the user plane network element exposes network congestion information of a quality of service QoS flow, receiving, by the user plane network element, an exception report from an access network device corresponding to the QoS flow, wherein the exception report indicates that transmission of a data packet carried in the QoS flow is abnormal; and
when the transmission of the data packet carried in the QoS flow is abnormal, managing and/or controlling, by the user plane network element, transmission of the QoS flow.

25. The method according to claim 24, wherein managing and/or controlling, by the user plane network element, the transmission of the QoS flow comprises:
managing and/or controlling, by the user plane network element, the transmission of the QoS flow in response to configuration information, wherein the configuration information indicates that when the network congestion information of the QoS flow is exposed but the transmission of the data packet carried in the QoS flow is abnormal, the transmission of the QoS flow needs to be managed and/or controlled.

26. The method according to claim 25, wherein the method further comprises:
receiving, by the user plane network element, the configuration information from a session management network element corresponding to the QoS flow.

27. The method according to either of claims 25 and 26, wherein managing and/or controlling, by the user plane network element, the transmission of the QoS flow comprises:
performing, by the user plane network element, at least one of the following operations on the QoS flow: sending the exception report to the session management network element, sending an alarm notification to an application function network element, discarding the data packet carried in the QoS flow, or exposing new network congestion information of the QoS flow, wherein
the session management network element is a network element corresponding to the QoS flow, the exception report indicates that the transmission of the data packet carried in the QoS flow is abnormal, the application function network element is a network element corresponding to a service carried in the QoS flow, the alarm notification indicates that transmission of a data packet of the service is abnormal, and a proportion value represented by the new network congestion information is a sum of a proportion value represented by the network congestion information of the QoS flow and a preset increment proportion value.

28. A communication method, comprising:
obtaining, by a policy control network element, policy information of transmission of a service flow, wherein the policy information of the transmission of the service flow indicates that it is necessary to determine, based on a congestion degree of the service flow, whether the transmission of the service flow needs to be adjusted, and manage and/or control the transmission of the service flow when the transmission of the service flow needs to be adjusted but is not adjusted;
sending, by the policy control network element, the policy information to a session management network element;
sending, by the session management network element, configuration information of the service flow to a first network element based on the policy information, wherein the first network element is an access network device or a user plane network element, the configuration information indicates that it is necessary to determine, based on the congestion degree of the service flow, whether the transmission of the service flow needs to be adjusted, and manage and/or control the transmission of the service flow when the transmission of the service flow needs to be adjusted but is not adjusted;
obtaining, by the first network element, network congestion information of the service flow; and
in response to the configuration information, if the first network element determines, based on the network congestion information of the service flow, that the transmission of the service flow needs to be adjusted but is not adjusted, managing and/or controlling, by the first network element, the transmission of the service flow.

29. A communication apparatus, wherein the apparatus comprises modules configured to perform the method according to any one of claims 1 to 28.

30. A communication apparatus, wherein the communication apparatus comprises a processor and a memory, the memory is configured to store computer instructions, and when the processor executes the instructions, the communication apparatus is enabled to perform the method according to any one of claims 1 to 28.

31. A computer-readable storage medium, wherein the computer-readable storage medium comprises a computer program or instructions, and when the computer program or the instructions are run on a computer, the computer is enabled to perform the method according to any one of claims 1 to 28.
